# EUROPEAN PATENT SPECIFICATION

(11) **EP 1 946 498 B1**
(45) Date of publication and mention of the grant of the patent: **24.02.2010**
(21) Application number: 06808474.8
(22) Date of filing: 08.11.2006
(51) Int. Cl.: H04L 12/56

(54) **COMMUNICATION SYSTEM AND METHOD**
KOMMUNIKATIONSSYSTEM UND VERFAHREN
SYSTEME ET PROCEDE DE COMMUNICATION

(30) Priority: 10.11.2005 GB 0522987; 12.04.2006 GB 0607374
(43) Date of publication of application: 23.07.2008
(73) Proprietor: Cambridge Broadband Networks Limited, Cambridge CB4 0WZ (GB)
(72) Inventor: PORTER, John, David, Witchford, Ely Cambridgeshire CB6 2HP (GB); BARDEN, Richard, Mark, Cambridge CB4 0WZ (GB)
(74) Representative: Ponder, William Anthony John
(86) International application number: PCT/GB2006/004180
(87) International publication number: WO 2007/054695

(56) References cited:
- WO-A-2004/110000
- GB-A- 2 276 518
- US-B1- 6 633 566

## Description

The invention relates to a communications system and to a method of communication especially, but not exclusively, to circuit emulation services (CES) over an asynchronous transfer mode (ATM) network. Additionally, this invention relates to multi-user telecommunications systems such as fixed wireless access (FWA), which use ATM as the transport protocol.

A communications network carries information among a number of locations.
It consists of nodes connected by links carrying information between them. Rather than have a separate set of wires or separate radio channel for each voice or data conversation, time-division multiplexing (TDM) may be used. For example, ITU-T G.704 consists of 32 channels of 64kbps, making up 2.048Mbps. To meet increasing demand for bandwidth, ITU-T G.702 describes the pleisiochronous digital hierarchy (PDH), in which the basic G.704 links are joined together using bit-stuffing to synchronise them. The basic 2.048Mbps link is known as "E1", and the hierarchy is based on multiples of four E1s, for example: E2 is made up of four E1s and offers 8Mbps bandwidth. Since E1 is a synchronous TDM link, a channel that has been set up between two users is dedicated until the connection is torn down. Also, dropping and inserting traffic into a PDH link requires a full set of demultiplexers to separate the data stream into individual E1s. Synchronous Digital Hierarchy (SDH) has capability for bandwidth on demand, and is made up of multiples of E1. Both PDH and SDH are circuit-based digital networks, and are referred to as synchronous transfer mode (STM).

Growth in the use of computers has led to the development of packet-based networks. In a packet-based network, the stream of data is split up into packets at the entrance to the network, and is re-assembled at the destination.
A packet-based call does not require a dedicated circuit through the network, so allowing packets from one call to be inserted in-between packets from many other calls. Thus packet-based networks can utilise network bandwidth more efficiently than circuit-based networks, and so are better suited to carrying bursty data traffic. Asynchronous transfer mode (ATM) uses fixed-length packets (ATM cells) which allows switching of packets in hardware, resulting in higher speeds than is possible with Ethernet. ATM is very flexible, enabling transmission of different media types such as voice, video and data. It allows dedicated circuits to be set up simultaneously with different bandwidths and Quality of Service (QoS), with high priority and low priority traffic. ATM works in connection-oriented mode, so guaranteeing correct cell-sequencing for packets in a given connection. There are five classes of QoS: Class 0 (always guaranteed), Class 1 (CES and constant bit rate), Class 2 (variable bit rate audio and video), Class 3 (connection-oriented frame relay) and Class 4 (connectionless data transfer such as IP and SMDS).

However, packet-based networks usually do not work well for time-critical applications such as voice, because the packets may experience delay variations whilst travelling through the network. As a result, packets are not received at a constant bit rate, and this has a significant impact on the quality of time-critical connections, such as a telephone call. To allow network operators to carry different applications over a single network, a solution is needed which provides the advantages of both a circuit-based constant bit rate service, and a packet-based, high bandwidth utilisation service.

One approach offered by the ATM Forum, is circuit emulation service (CES) over ATM, described in; "Circuit Emulation Service Interoperability Specification", Version 2.0, January 1997, AF-VTOA0078.000, available for download from http://www.atmforum.com, the contents of which are hereby incorporated by reference. CES over ATM establishes a logical path through the ATM network. In this respect, CES over ATM is similar to time-division multiplexing (TDM) in that all data follows the same path from one point to another in the network, and so packets should be received in the correct order. An ATM path can accommodate multiple circuits. Depending on the data rate needed for a given circuit, different bit rates can be assigned to different circuits using the same path, so providing a variety of service levels to different users, and allowing greater control over delay variations.

The ATM Adaptation Layer (AAL) converts data from higher-level formats such as X.25, Ethernet, and STM into ATM cells and back again. Within AAL, the convergence sublayer (CS) and segmentation and reassembly sublayer (SAR) take care of applications that require constant bit rate (CBR) and variable bit rate (VBR). ATM Adaptation Layer AAL 1 is used by CES, which requires a very low cell transfer delay and delay variation to carry STM services (for example, streams of E1) over ATM. AAL 1 handles synchronisation, delay jitter, cell loss and wrong cell insertion. The CS and SAR are included in the adaptation layer header, which sits between the ATM cell header and payload data in the ATM cell. When carrying an E1 stream over ATM, each E1 frame is smaller than an ATM cell, which means that in order to make full use of the ATM cell payload, E1 frames are subdivided across two ATM cells by the AAL 1 adaptation layer. All ATM cells have a 1-byte AAL 1 header after the ATM cell header, consisting of a 3-bit sequence number, 4-bit cyclic redundancy check (CRC) and 1-bit convergence sublayer indicator (CSI). The CSI bit in odd-numbered cells is used for synchronous residual time stamp (SRTS) synchronisation. Even-numbered ATM cells may also have a structured data transfer (SDT) pointer after the AAL 1 header. The CSI bit in even-numbered ATM cells is set to indicate the presence of an SDT pointer.
The SDT pointer points to the first boundary of an E1 frame within the ATM payload, and acts as a check when re-assembling E1 frames. The SDT pointer contains a 7-bit offset having values 0-93 (byte offset split over two ATM cells) or 127 (dummy value), and a parity bit. ATM cells are collected together into a frame of eight cells, and only one SDT pointer is allowed to be active per frame, which makes the system slow to switch channels on and off.

Since E1 is a circuit-based service, it must continue to send data (even if the circuit is idle), until the connection is tom down. When carrying E1 over ATM, however, it is possible to save transmission bandwidth by leaving out any idle channels of the E1 stream. Information about which channels are active at any particular time, may be obtained from the signalling channel, or else by monitoring the E1 channels individually.

ATM Forum specification "(DBCES) Dynamic Bandwidth Utilization in 64 KBPS Time Slot Trunking Over ATM - Using CES", July 1997, AF-VTOA0085.000, available for download from http://www.atmforum.com, the contents of which are hereby incorporated by reference and also UK patent GB 2276518A, "Statistical gain using ATM signalling" describe a method of saving bandwidth when carrying STM over ATM. This method uses an ATM Adaptation Layer 1 (AAL 1) format that additionally includes a map indicating which STM channels are idle, the idle channels not being transmitted in the ATM cells, and this is achieved using a busy-map for each set of eight ATM cells. The busy-map is a field of length 1-byte up to 4 bytes, which has a 1-bit marker for each of the transmitted timeslots of the E1 bearer (up to 31 timeslots). The marker bit is set if the corresponding timeslot is busy. The length of the frame can be calculated by adding up the number of set bits in the busy-map, and the busy and idle bytes can be sorted using the pattern of bits in the busy-map. This method uses 4 octets (bytes) per frame, which is an overhead. If a cell containing the busy-map is lost, then the following cell may have to be discarded. The damage will extend from the lost cell through to the frame beginning after the next busy-map.

Drawbacks of the busy-map system are as follows:
(a) For data with rapid fluctuations from busy to idle, the busy-map is slow-reacting because it can only be updated at most once per ATM frame (that is eight ATM cells, or a minimum of twelve E1 frames). It is inefficient because it cannot change configuration quickly enough to delete E1 channels that become idle in-between busy-maps.
(b) A more serious problem is that if a channel changes from idle to busy, then there is no way of transmitting the data for that channel until the next busy-map, so resulting in lost data. This is less critical for voice trunking, but limits use for other data applications. The delay in switching on channels is at least twelve E1 frames (12 x 125 microseconds), equal to 1.5 milliseconds. Thus the busy-map bandwidth utilisation system is lossy, and this can only be overcome by inserting a prohibitively large number of busy-maps.

Therefore, an improved method is desirable for carrying TDM traffic (such as E1) over ATM, which is both more efficient and less lossy.

In wireless networks, radio spectrum is a scarce resource, and so it is important to use bandwidth as efficiently as possible.

In a first aspect the invention provides a communications system comprising a transmitter, a receiver, and a transmission medium between the transmitter and the receiver, the transmitter being arranged to transmit asynchronous transfer mode (ATM) cells in which synchronous transfer mode (STM) channels are assembled; characterized in that the transmitter is configured such that at least some of the ATM cells include a switch command, the switch command indicative of a change in the activation state of an STM channel.

This gives the advantage that the state of an STM channel can be changed from idle to busy or busy to idle in the same ATM cell as the change occurs, assuming that the number of STM channels changing state is not too large. Consequently the chance of information being lost as an STM channel changes state from idle to busy is reduced compared with the busy map arrangement of the prior art. In addition since only changes in the state of a channel are signalled the overhead entailed in the signalling of the STM channel state is reduced when changes are less frequent.

When more than one STM channel in an ATM cell changes activation state a corresponding number of switch commands may be included in the ATM cell.

When no STM channel in an ATM cell changes activation state no switch commands are included in the ATM cell.

STM channels and switch commands may fill the ATM cell from opposite ends of the cell. This enables the switch commands to be packed in consecutive blocks allowing ATM cells to be utilised efficiently.

The convergence sublayer indicator (CSI) bit in each ATM cell may be used to indicate the presence of switch commands in the cell. This enables the presence of switch commands with an ATM cell to be identified, so that a receiver may be monitor the state of the STM channels and perform the unpacking of the STM channels correctly.

The switch commands may comprise two bytes, the first including a pointer pointing to the start of a block of STM channels and the second including a pointer pointing to the channel within the block of STM channels to which the switch command applies.

The first byte may further include a bit indicating whether any further switch commands are present in the ATM cell. This enables the presence of any further switch commands to be identified if the bit is set and indicates that no further switch commands are present in the ATM cell when the bit is cleared.

The second byte may further include data indicating whether an STM channel comprises a number of sub channels and if so to which sub channel the switch command applies. In this way STM channels using fewer than eight bits can share an ATM byte and may use one, two, or four bits of a byte.

In one embodiment the switch command may include a third byte, the third byte including one or more error detection/correction bits for detecting/correcting errors in the data in the first and/or second bytes.

A resynchronisation command may be sent at desired intervals, the resynchronisation command carrying sufficient information to enable the receiver to check the current activation state of all the STM channels.

By sending resynchronisation commands at regular intervals it is possible to correct and update the information at the receiving end should switch commands be lost due to loss or corruption of ATM cells containing switch commands.

The resynchronisation command may comprise a first command indicating that resynchronisation instructions are being transmitted, a series of switch commands, one for each active STM channel, and a final command indicating that the resynchronisation instructions are complete.

Alternatively, the resynchronisation command may comprise a first command indicating that resynchronisation instructions are being transmitted, a series of switch commands, one for each inactive STM channel, and a final command indicating that the resynchronisation instructions are complete.

The resynchronisation command may include error detection and/or correction.

Thus it is possible to determine whether there are any errors in the resynchronisation commands and possibly to correct certain of the errors.
Error detection/correction codes will be known to the person skilled in the art.

A switch command for an inactive channel may include a third byte that indicates the value to be assigned by the receiver to that idle channel.

This can be used to correct the value assigned to an idle channel at the receiver if that information had become corrupted.

A system may comprise first and second terminals, each comprising a transmitter and a receiver, and a transmission medium between the transmitters and receivers, each transmitter being arranged to transmit asynchronous transfer mode (ATM) cells in which synchronous transfer mode (STM) channels are assembled; wherein at least some of the ATM cells include a switch command, the switch command indicating a change in the activation state of an STM channel.

The switch commands produced by the first and second transmitters may be independent of each other.

Thus, for duplex communication each transmitter may be arranged to transmit only active channels of the STM signal with the respective receivers receiving switch commands from the transmitter together with the STM channels in the ATM cells.

In a second aspect the invention provides a transmitter configured to transmit asynchronous transfer mode (ATM) cells in which synchronous transfer mode (STM) channels are assembled; characterized in that at least some of the ATM cells include a switch command, the switch command indicative of a change in the activation state of an STM channel.

In a third aspect the invention provides a receiver for receiving asynchronous transfer mode (ATM) cells in which synchronous transfer mode (STM) channels are assembled; characterized in that at least some of the ATM cells include a switch command, the switch command indicative of a change in the activation state of an STM channel and wherein the receiver is configured to detect from the switch commands those STM channels that are active and to assemble the STM channels from successive ATM cells.

In a fourth aspect the invention provides a communications method comprising the steps of;
packing a synchronous transfer mode (STM) frame comprising a plurality of channels into asynchronous transfer mode (ATM) cells for transmission, characterized by
inserting a switch command indicating whether a single STM channel is active or inactive into each ATM cell in which the activation state of an STM channel changes or a preceding ATM cell,
transmitting the ATM cells including the switch commands, and
on reception of the ATM cells using the switch command to enable the unpacking of the STM channels from the ATM packets.

In a fifth aspect the invention provides a method of transmitting asynchronous transfer mode (ATM) cells in which synchronous transfer mode (STM) channels are assembled characterized by the step of including a switch command in at least some of the ATM cells, the switch command indicating a change in the activation state of an STM channel.

In a sixth aspect the invention provides a method of receiving synchronous transfer mode (STM) channels assembled in asynchronous transfer mode (ATM) cells characterized by at least some of the ATM cells including a switch command, the switch command indicating a change in the activation state of an STM channel the method comprising the steps of;
detecting from the switch commands those STM channels that are active, and
assembling the STM channels from successive ATM cells using the state of the STM channels derived from the switch commands.

Preferred, optional, and alternative features of the invention are set forth in the dependent claims to which reference should now be made.

The above and other features and advantages of the invention will be apparent from the following description, by way of example, of an embodiment of the invention with reference to the accompanying drawings, in which:
Figure 1 is a diagram showing E1 frames carried over ATM, using the ATM Forum specification AF-VTOA0078.000 for use in prior art communication systems, Figure 1(a) showing an odd-numbered ATM cell carrying E1 frames and Figure 1(b) showing an even-numbered ATM cell with an SDT pointer showing the boundary of the E1 frame;
Figure 2 is a diagram of an ATM cell for use in a communication system according to the invention including variable-length E1 frames and switch commands to indicate those E1 timeslots whose activation state is inverted;
Figure 3 is a diagram showing the format of different switch commands for use in an embodiment of a communications system according to the invention;
Figure 4 is a diagram showing the structure of a package of Resync commands for use in an embodiment of a communications system according to the invention;
Figure 5 is a block schematic diagram of an embodiment of a control unit for use in an embodiment of a transceiver in a communications system according to the invention to implement the InterWorking Function mapping STM frames to ATM cells;
Figure 6 is a flow diagram illustrating the assembly of STM channels and switch commands into ATM cells for transmission;
Figure 7 is a flow diagram illustrating the assembly of Resync commands at intervals into ATM cells; and
Figure 8 is a flow diagram illustrating the unpacking of STM channels from received ATM cells.

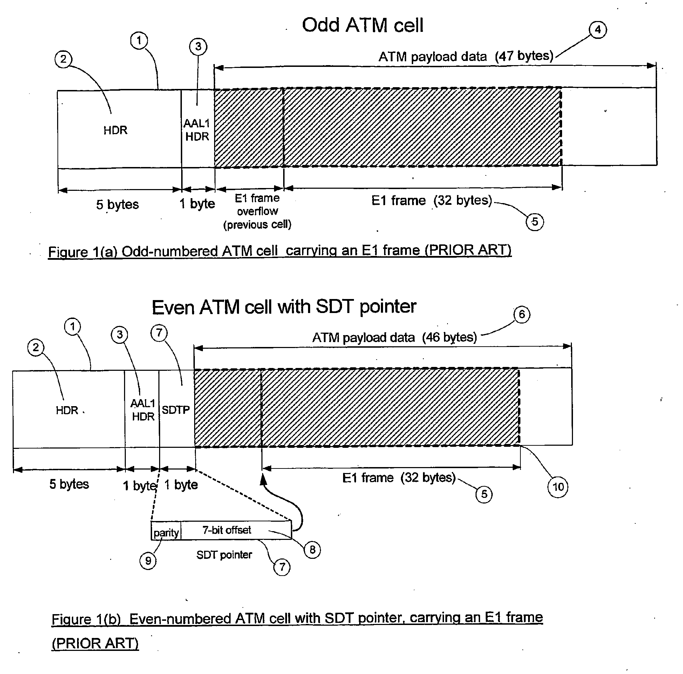

Figure 1 shows the standard CES AAL structure when carrying E1 frames over ATM. In Figure 1(a), an odd-numbered ATM cell 1 is shown. The standard ATM cell starts with a 5-byte ATM cell header 2, followed by a 1-byte AAL header 3, which contains the CSI bit. A 32-byte E1 cell 5 is packed into the 47-byte ATM data payload 4. Figure 1 (b) shows an even-numbered ATM cell 1, which includes a SDT pointer 7. The SDT pointer includes a 7-bit offset 8, pointing to the boundary 10 of the E1 cell 5. The SDT pointer 7 also includes a parity bit 9 to check for bit errors. The shortened ATM data payload 6 is only 46 bytes long. The presence of the SDT pointer is indicated by setting the CSI bit in the AAL 1 header 3, but this bit may only be set once in every frame of eight ATM cells.

In one embodiment of the invention where bi-directional communication is provided, the dynamic bandwidth optimisation protocol functions in each direction (upstream and downstream), independently. Each end decides which timeslots to send, but is told which timeslots to receive by switch commands embedded inband in the virtual circuit (VC). These switch commands allow any data channel (8-bit, 4-bit, 2-bit or 1-bit) to be turned on or off within the same STM frame.

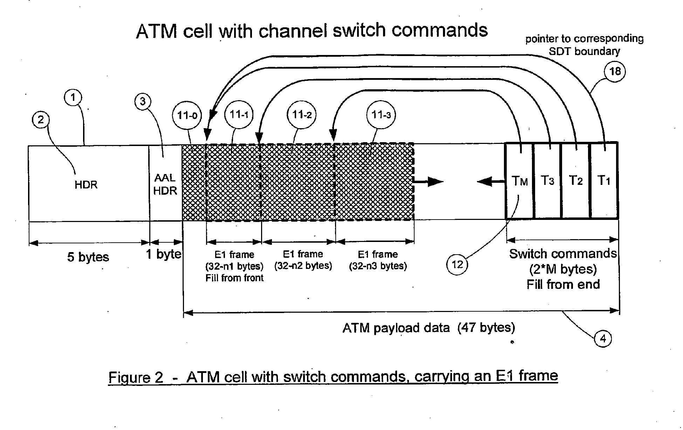

The AAL ATM cell structure of the present invention is shown in Figure 2.

The ATM cell 1 begins with a 5-byte header 2 that is the same as the header of the ATM cell of Figure 1, and is followed by a modified AAL header 3, in which the CSI bit is used to indicate the presence of switch commands 12, that is the bit is set when a switch command is present in the cell and cleared when no switch commands are present. There are M switch commands, where M is the total number of E1 channels that change state in the E1 frames contained in the ATM cell, and q whole E1 frames, carried in a particular ATM cell. If, for example, all 31 E1 channels were active in the previous E1 frame, and in the current frame n₁ channels become idle, then these n₁ channels are omitted from the E1 frame, resulting in a shorter E1 frame 11-1 packed into the ATM data payload 4. To achieve this, p₁ switch commands 12 need to be inserted, starting from the end of the ATM cell. In this example, n₁ = p₁, but in general this will not be the case. The value n₁ is the number of inactive E1 channels (from 0 - 31) in an E1 frame, and the value p₁ is the number of E1 channels that changed state from the previous E1 frame. Since the number of active channels is, usually, smaller than thirty two it may be possible to pack a plurality of E1 frames, in the case of the example three E1 frames 11-1, 11-2, and 11-3 having 32 - n₁, 32 - n₂, and 32 - n₃, E1 channels, respectively, into an ATM cell. Also E1 frames may be spread between adjacent ATM cells, in this case the end of an E1 frame 11-0 carried over from the previous ATM cell is shown.

Each switch command comprises 2 bytes. Typically most E1 frames will not have any channels changing state, so no switch commands will be needed, thus M=0 for most ATM cells. There will be savings in bandwidth whenever N > 2M, where N = n₁ + n₂ + n₃ + ... + n_{q} and M = p₁ + p₂ + p₃ + ... + p_{q} and q is the number of E1 frames in that particular ATM cell. This means that the system will be most efficient when few E1 channels are active, and they do not change state very often and will become less efficient as the number of active E1 channels increases and with increasing frequency of channel state changes.

The first byte of each switch command contains a pointer to the start of the associated E1 frame and consequently can be used to check synchronisation as well as indicating the E1 frame to which the switch command relates. If two or more STM channels change state in one E1 frame there will be a corresponding number of switch commands all having a pointer to the start of the same E1 frame. This can be seen in Figure 2 where the pointer from switch commands T₁ and T₂ both point to the start of E1 frame 11-1, whereas switch command T₃ points to the start of E1 frame 11-2 and switch command T_{M} points to the start of E1 frame 11-3. The particular channel in the E1 frame to which the switch command relates is indicated by data in the second byte. Thus for switch commands relating to different channels in the same E1 frame the pointer will have the same value but the channel data in the second byte of the switch commands will differ.

In a further embodiment the switch commands may comprise three bytes and in this case the third byte may comprise an error detection/correction code for the data in the first two bytes. This offers a more robust approach where the transmission channel may be noisy but at the expense of requiring a greater signalling overhead. The complexity of the error detection/correction code will be dependent on the protection desired and may be provided, for example, as a simple parity check, a Hamming code, or a cyclic redundancy code.

Alternatively, the third byte may give the value to be applied to the idle channel by the receiver. It will be appreciated that an idle channel may have a non-zero value.

The payload data contains STM frames packed sequentially, across ATM cell boundaries if necessary. The switch commands 12 are linked sequences of commands, each usually occupying 2 bytes, and provide dynamic activation /de-activation of an STM channel. The switch commands also provide periodic resynchronisation points to support recovery from loss of AAL synchronisation at the receiver. By causing the payload structure of data and switch commands to fill up from opposite ends of the ATM cell, commands and data can be synchronised. A command activating a channel must be associated with the particular SDT block in which the activation occurs. That is, a switch command must be within the same ATM cell as the E1 frame to which it relates or a preceding ATM cell.

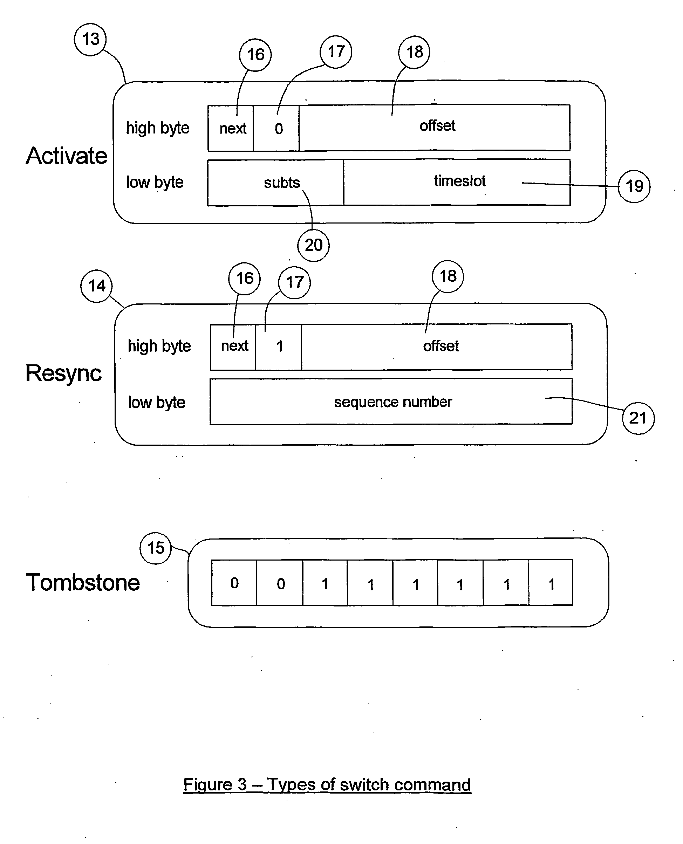

Figure 3 shows the structure of three types of switch commands: that is an Activate command 13, a Resync command 14 and Tombstone byte 15. In the Activate 13 and Resync 14 commands, the high byte "next" bit 16 is set if there is another switch command after this 2-byte command. The last command in an ATM cell must have the "next" bit 16 unset. A single-byte Tombstone command 15 will only appear as the last byte inserted into the cell (inserted in-between the data bytes and switch commands), and is used to occupy a solitary byte that could not otherwise be used. The six "offset" bits 18 of the high byte point to the byte in the data part of the payload, indicating the start of the SDT block or E1 frame to which this command refers. The byte following the AAL header is referenced as one, so the range of values for "offset" is 1 - 47, and some reserved values may be utilised for other functions. In the low byte, the five "timeslot" bits 19 indicate the timeslot position within the VC's set of timeslots, so on a particular VC, the upper limit is NSLOTS-1. The relative position definition is necessary to allow timeslots to be mapped differently at the E1 interface at each end. The three "subts" bits 20 are not used for 8-bit operation. For operation with channels smaller than eight bits wide, the "subts" bits 20 are used to identify a particular sub-channel within the timeslot. In the Resync command 14, the low byte consists of an 8-bit "sequence number" 21, which is related to the G.704 frame count on the source E1 interface. Its primary purpose is to allow multiple VC's originating on the same E1 bearer to be resynchronised exactly when recombined. The Activate 13 and Resync 14 switch commands comprise 2 bytes, and cannot be split across ATM cells. Thus in one embodiment if a single byte is empty after the last switch command, it is filled with a 1 byte Tombstone command 15.

Dynamic channel control is achieved by using the Activate command 13 (which is used to either activate or deactivate an individual channel). The high byte offset 18 identifies the start of the SDT block (E1 frame) in which the activation takes effect and the low byte timeslot 19 identifies the channel within the SDT block to which the switch command relates. If all the commands associated with a particular E1 frame 11 cannot be fitted into the same ATM cell 1, then they can be put into the next cell. Commands in the late cell will have "offset" value of zero, since the relevant SDT block may have already started. The next SDT block cannot have any data in the first cell. In this late command case, it is important that any channel value for the SDT block that is associated with the channel of the late command, is in the relevant late cell. That is if a complete E1 frame is contained within an ATM cell all the switch commands must be contained within that cell, but if an E1 frame is split across two ATM cells switch commands relating to the later part of the E1 frame may be in the later ATM cell.

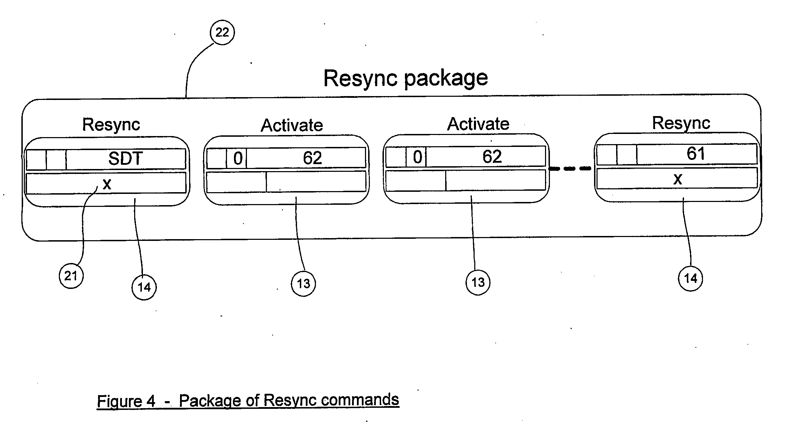

Since the Activate switch commands only indicate that a channel is changing state and not the actual state of the channel any errors in transmission will have a cumulative effect and hence the communication will become less reliable as the number of cells transmitted increases. In order to recover from this state a package of Resync commands 22 is sent, at given time intervals, that contain enough information for the receiver to check the state of active E1 channels, and resynchronise with the transmitter if necessary. This allows recovery from lost cells, or bit errors in the data. The package of Resync commands 22 may span several ATM cells 1, and has a pattern as shown in Figure 4. The first Resync command 14 has an offset value 18 that identifies the SDT block start, and a sequence number 21 that identifies the G.704 frame count at which the synchronisation snapshot was taken. The number of Activate commands 13 between the Resync commands are chosen to be sufficient to identify all active channels. The Activate commands 13 have an offset value of 62, which distinguishes them from normal dynamic channel control Activate commands and the timeslot values 19 indicate the channels that are active. The final Resync command 14 has an offset value of 61 and is used to terminate the package 22, and has the same sequence number 21 as the first Resync command. An alternative embodiment of the invention includes a cyclic redundancy check (CRC) calculated over the whole of the Resync package, and placed in the sequence number field 21 of the last Resync command 14, thus allowing the receiver to check the Resync package for bit errors.

In a further alternative embodiment, the Resync package may include an Activate command 13 for each channel which is idle, to allow resynchronisation in the event of catastrophic synchronisation failure. This is useful if there are only a small number of idle channels, in which case it requires fewer commands to indicate those channels that are idle than those that are active.

When an idle channel is present, the dynamic bandwidth optimisation system will not send that timeslot over the ATM link, and the receiver will continue to insert (play-out) the last active data value into the idle channel position in the output STM data stream. Repeating errors may occur if the receiver is playing-out the wrong value into the idle channel position. A further embodiment uses augmented Activate commands in the Resync package, each augmented Activate command containing a third byte to hold the idle channel data value. This provides a mechanism to check that the receiver is inserting the correct data value corresponding to each idle channel present.

In one embodiment of the invention, frames carried over ATM have channels of 8 bits wide, for example for transporting E1 frames 5. In this case, timeslot byte values are packed into ATM cells 1. Each SDT block contains data from all the active channels in one received G.704 frame. In Activate commands 13, the value of subts 20 is zero (unused). The presence of an Activate command causes the specified channel to invert its activation state (toggle). There is usually a minimum number of timeslots, that are usually kept active, for example 5 out of 31 available timeslots always active. The case of no active timeslots is a special case requiring a mode switch, or it may be avoided by keeping a minimum number of channels active. In a further embodiment, the minimum number of active timeslots is configurable by the user, since it affects packetisation times and medium access control (MAC) efficiency.

In another embodiment of the invention, frames carried over ATM have timeslots divided into channels of 2 bits wide (crumbs), for example for transporting backhaul links for GSM cellular telephony, in particular the GSM full-rate 16kbps Abis channels. In this mode, G.704 frames are processed 4 at a time. For each 2-bit crumb in the virtual circuit (VC) there are four consecutive 2 bit frames available, which can be re-packed to create a byte holding the values of that crumb in the four frames. Four G.704 frames generate 4 AAL SDT blocks, each of which only contains data from one of the four crumbs for each timeslot, numbered 0 through 3. There is a minimum number of channels kept active for each crumb position, so that no SDT block is ever empty. There are some advantages to be gained by transposing crumb data and watching for inactivity on three consecutive transposed bytes to trigger individual crumb channel deactivation. The first advantage is that if a 16kbps channel contains a repeating byte pattern, for example an idle pattern or repeating high-level data link control (HDLC) flags, then it will be deactivated. Secondly, if the channel is actually a 64kbps channel containing a repeating byte pattern, then all four crumbs will trigger deactivation. The third advantage is that GSM idle speech frames and other idle frames in 16kbps channels can be compressed well. When using timeslots divided into 2-bit crumbs, the subts value of each Activate command is used to indicate which 2-bit crumb is referred to, as shown in Table 1:

**Table 1 - Values of subts in Activate commands for crumb-based protocol**

| Value of subts | Action |
|---|---|
| 000 | Switch crumb 0 |
| 001 | Switch crumb 1 |
| 010 | Switch crumb 2 |
| 011 | Switch crumb 3 |
| 100 | Activate whole timeslot |
| 101 | unused |
| 110 | unused |
| 111 | Deactivate whole timeslot |

In Table 1, whole timeslot activation and deactivation are optimisations that can be used when several 2-bit crumbs can be activated or deactivated at the same time. The SDT boundary referenced by a Resync package is always one which lies between a crumb 3 SDT block and a crumb 0 SDT block, so that crumbs occupy the same relative position in both terminating E1 timeslots.

In another embodiment of the invention, frames carried over ATM have timeslots divided into units of 1-bit wide, for example for transporting backhaul links for GSM cellular telephony, in particular the GSM half-rate 8kbps Abis channels.

In another embodiment, channel switch decisions are made by monitoring activity on individual STM channels on a per-block basis. The size of a block must match the data block size of the external data protocol. For example, applications like PBX and GSM are byte-structured, and so activity monitoring must also use a block size of one byte. The activity monitoring algorithm looks ahead by a small number of blocks (for example three blocks). If a channel is currently set as active and three or more consecutive blocks from the same channel have the same value, then an Activate command may be issued to change the state from active to inactive, and vice-versa. If timeslots are smaller than the external block size, then it is necessary to collect full blocks for input to the activity monitoring algorithm. For example if the external data block size is 8-bits, and timeslots are 2-bits wide, then four frames must be collected to make up a single 8-bit block for activity monitoring. The number of consecutive blocks monitored for channel switch decisions is a trade-off between delay and bandwidth optimisation. In a further embodiment, the parameters used for switching decisions are configurable by the user.

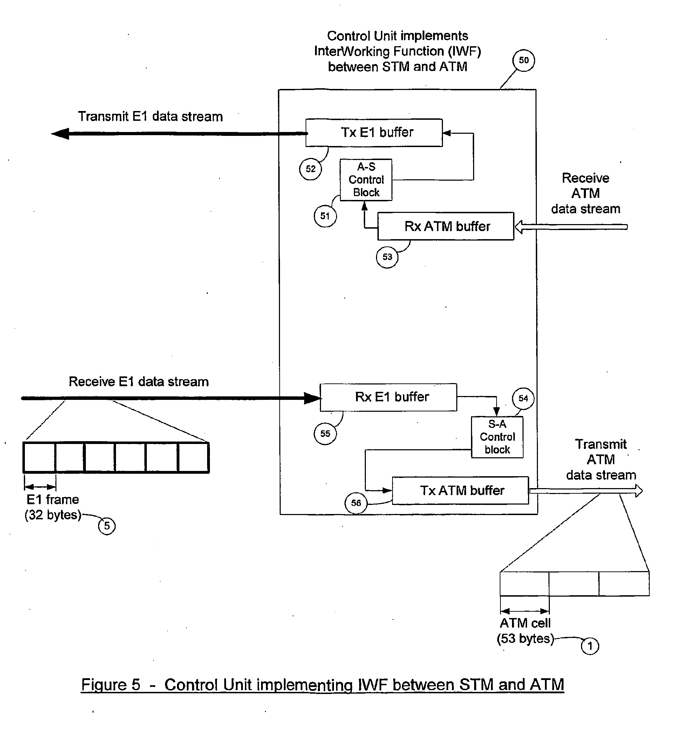

Figure 5 shows, in block schematic form, a Control unit 50 for implementing the InterWorking Function (IWF), which maps STM frames (such as E1 frames 5) to ATM cells 1 on an ATM permanent virtual circuit (PVC), and vice-versa. As shown in Figure 5 an Rx E1 buffer 55 stores received E1 frames, and acts on instructions from an STM -ATM Control Block 54 to pack the received E1 data into ATM cells 1 which are queued in a Tx ATM buffer 56, for onward transmission. An Rx ATM buffer 53 stores incoming ATM cells 1, and acts on instructions from an ATM - STM Control Block 51 to unpack and re-construct the E1 data stream in a Tx E1 buffer 52.

The control blocks 51 and 54 are suitably formed by programmed digital signal processors comprising a microprocessor and associated data and program memories. The buffers 52, 53, 55 and 56 may conveniently be part of the data memories associated with the processors.

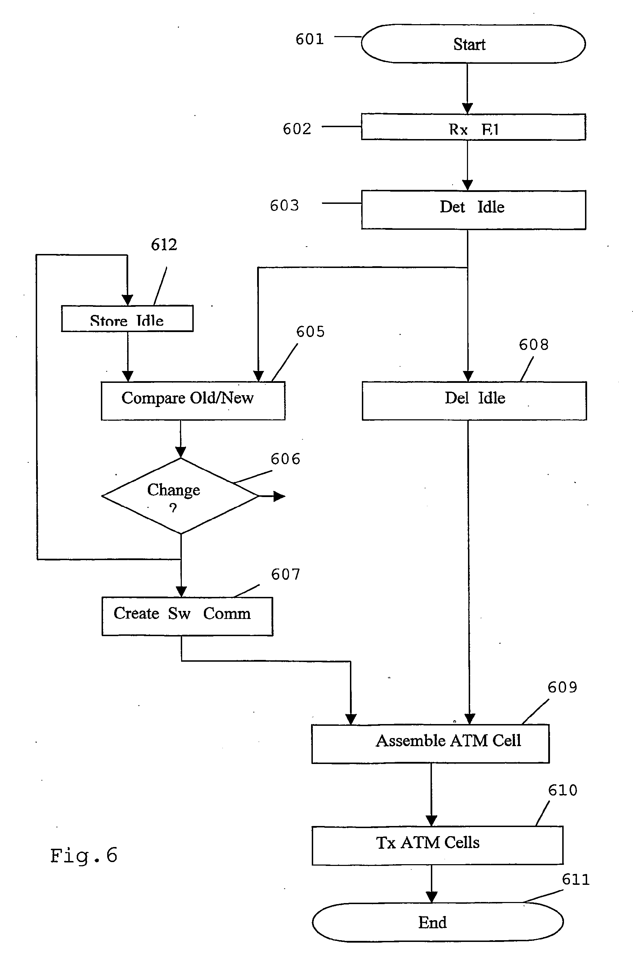

Figure 6 is a flow diagram illustrating the process followed by the STM-ATM Control Block 54 in assembling E1 frames into ATM cells together with associated switching signals.

The process starts, box 601, with the reception of E1 frames box 602 into the buffer 55. The control block 54 then detects any idle channels within an E1 frame, box 603. If a channel is detected as idle it is compared with the state of that channel stored in an idle store, which is located within the memory in the control block 54, box 605, to see whether the state of the channel has changed, box 606. If the state of the channel has changed, then the idle store is updated, box 612, and also Activate switch commands are generated, box 607. The idle channels are then deleted from the E1 frame, box 608, and the remaining channels of the E1 frame together with the switch commands, if any, are assembled into an ATM cell, box 609. The ATM cells are then transmitted, box 610, and the process ends, box 611. In the arrangement shown in Figure 5, the control block 54 and buffers 55 and 56 may be implemented using a microprocessor and associated data and program memories. The buffers 55 and 56 will use part of the associated data memory as will the memory for storing those E1 channels that are idle. The processor will be programmed to provide the functions shown in the flow diagram of Figure 6, the program being stored in the program memory associated with the microprocessor, the microprocessor and associated memory forming the control block 54.

As described earlier Resynchronisation commands, are sent periodically so that the correct information in the receiver with respect to which STM channels are idle can be maintained. It will be appreciated that since for normal transmissions only changes in the state of any particular channel are transmitted, it is possible that if ATM cells are not received or are corrupted the wrong information about idle channels may be retained in the receiving apparatus. In order to overcome this problem Resynchronisation commands are sent at regular intervals.

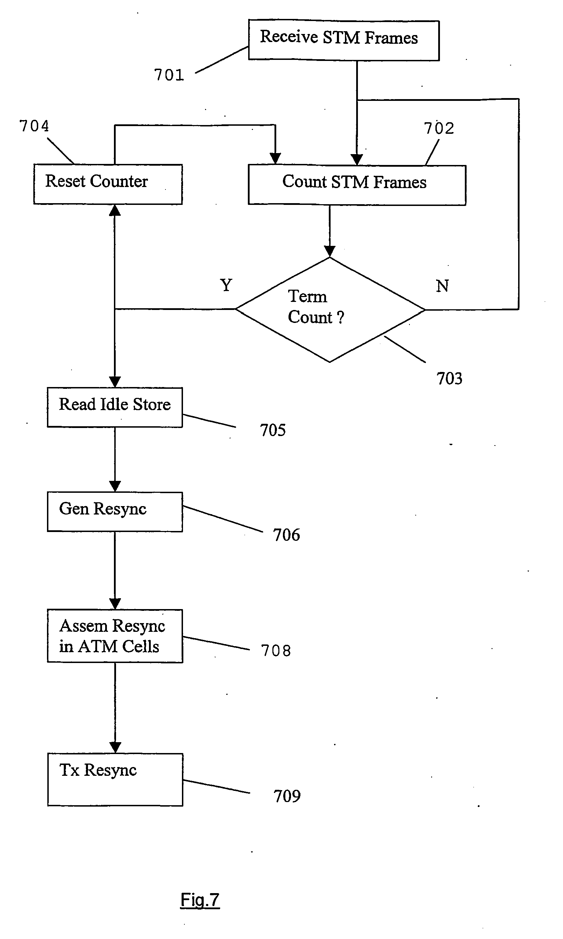

In order to produce these resynchronisation pulses, the routine shown in Figure 7 is followed by the control block 54. As E1 frames are received, box 701, they are counted, box 702, and a decision is reached as to whether or not they have reached a terminal count, box 703. If the terminal count has been reached a reset counter command is issued, box 704, and the counter is reset to a desired value. If the terminal count has not being reached then counting of E1 frames is continued. When the terminal count is reached the idle store is read, box 705, and a Resynchronisation command is generated which comprises a Re-sync command a number of activate commands being numbered depending on the number of idle channels and a final Re-sync command as described earlier. The Re-sync commands are assembled into ATM cells, box 708, and the ATM cells containing the Re-sync commands are transmitted, box 709.

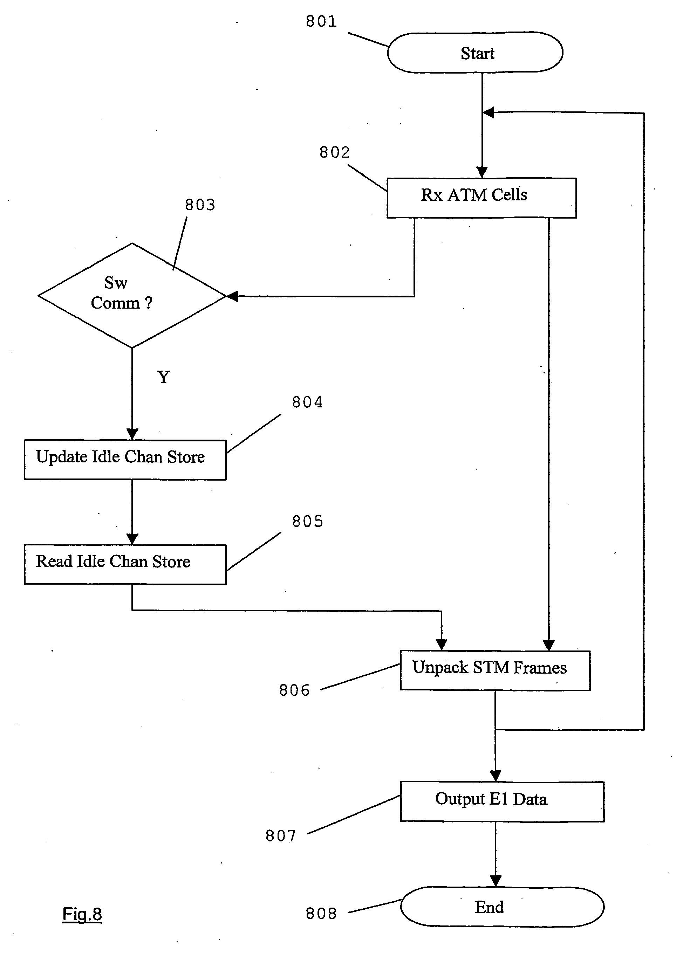

Figure 8 is a flow diagram illustrating the process carried out in the control block 51 and buffers 52 and 53 when receiving an ATM data stream and converting it to an E1 data stream. The process starts, box 801, with the reception of ATM cells into the ATM buffer 53, box 802. The control block 51 then inspects the ATM cells and makes a decision as to whether or not the ATM cells contain any switch commands, box 803. If there are switch commands then the control block 51 updates an idle channel store, box 804.

The idle channel store contains information as to whether a particular E1 channel is currently active or idle and, if the channel is idle, the value to be assigned to that E1 channel at the receiver when unpacking the ATM cell. It will be appreciated that an idle channel is representing a constant value that is not necessarily zero and that different idle channels may have different values.

The constant value may be stored by monitoring the value of each active channel and storing this value until the next E1 frame is received. The stored value is then overwritten with the new value if the channel remains active or is transferred to the idle channel store if the channel becomes inactive as part of the process of updating the idle channel store.

As has been discussed earlier the resynchronisation sequences may also include the value to be assigned to idle channels to enable the value stored within the idle channel store to be checked and corrected if necessary.

The idle channels stored in the idle channel store are then accessed, box 805, and used to enable the control block 51 to unpack the E1 frames from the ATM cells, box 806. The E1 frames are then transferred to the buffer 52, box 807, for output to a desired destination.

It will be apparent that both normal Activate commands and Re-sync commands will be detected by the control block 51. The only difference between their treatments is that the re-sync command will fully update the idle channel store whereas the Activate commands will only update the single channel in the idle channel store to which that Activate command relates.

## Claims

1. A communications system comprising a transmitter, a receiver, and a transmission medium between the transmitter and the receiver, the transmitter being configured to transmit asynchronous transfer mode cells (1) in which synchronous transfer mode channels (11) are assembled; **characterized in that** the transmitter is configured such that at least some of the asynchronous transfer mode cells include a switch command (12) indicative of a change in the activation state of a synchronous transfer mode channel.

2. A system as claimed in Claim 1 in which when more than one synchronous transfer mode channel in an asynchronous transfer mode cell changes activation state a corresponding number of switch commands (12) are included in the asynchronous transfer mode cell (1).

3. A system as claimed in Claim 1 in which when no synchronous transfer mode channel in an asynchronous transfer mode cell changes activation state no switch commands are included in the asynchronous transfer mode cell (1).

4. A system as claimed in Claim 1 or Claim 2 in which synchronous transfer mode channels (11) and switch commands (12) fill the asynchronous transfer mode cell (1) from opposite ends of the cell.

5. A system as claimed in any preceding claim in which the convergence sublayer indicator bit in each asynchronous transfer mode cell (1) is used to indicate the presence of switch commands (12) in the cell.

6. A system as claimed in any preceding claim in which the switch commands (12) comprise two bytes, the first including a pointer (18) pointing to the start of a block of synchronous transfer mode channels and the second including a pointer (19) pointing to the channel within the block of synchronous transfer mode channels to which the switch command applies.

7. A system as claimed in any preceding claim in which the switch commands (12) comprise three bytes, the third byte including one or more error detection/correction bits for detecting/correcting errors in the data in the first and/or second byte.

8. A system as claimed in Claim 6 or Claim 7 in which the first byte further includes a bit indicative of whether any further switch commands are present in the asynchronous transfer mode cell.

9. A system as claimed in any of Claims 6 to 8 in which the second byte further includes data indicative of whether a synchronous transfer mode channel comprises a number of sub channels and if so to which sub channel the switch command applies.

10. A system as claimed in any preceding claim in which the transmitter is configured to send a resynchronisation command (22) at desired intervals, the resynchronisation command carrying sufficient information to enable the receiver to check the current activation state of all the synchronous transfer mode channels.

11. A system as claimed in Claim 10 in which the resynchronisation command (22) comprises a first command (14) indicating that resynchronisation instructions are being transmitted, a series of switch commands (15), one for each active synchronous transfer mode channel, and a final command (14) indicating that the resynchronisation instructions are complete.

12. A system as claimed in Claim 10 in which the resynchronisation command (22) comprises a first command (14) indicating that resynchronisation instructions are being transmitted, a series of switch commands (13), one for each inactive synchronous transfer mode channel, and a final command (14) indicating that the resynchronisation instructions are complete.

13. A system as claimed in any of Claims 10 to 12 in which the resynchronisation command (22) includes error detection and/or correction.

14. A system as claimed in Claim 13 in which the error detection/correction comprises a cyclic redundancy check code.

15. A system as claimed in any of Claims 12 to 14 in which a switch command (12) for an inactive channel includes a third byte that indicates the value to be assigned by the receiver to that idle channel.

16. A system as claimed in any preceding claim comprising means for monitoring three or more consecutive bytes in each synchronous transfer mode channel and for initiating a switch command for that channel indicating that the channel is now inactive if it was previously active and the value of the consecutive bytes has not changed.

17. A system as claimed in any preceding claim comprising means for monitoring bytes in each synchronous transfer mode channel and for initiating a switch command for that channel indicating that the channel is now active if it was previously inactive and the current byte value has changed.

18. A system as claimed in any preceding claim comprising means for maintaining a desired minimum number of channels active.

19. A system as claimed in Claim 18, comprising means to allow the minimum number to be user selectable.

20. A system as claimed in any preceding claim comprising first and second terminals, each comprising a transmitter and a receiver, and a transmission medium between the transmitters and receivers, each transmitter being configured to transmit asynchronous transfer mode cells (1) in which synchronous transfer mode channels (11) are assembled; wherein the transmitters is configured such that at least some of the asynchronous transfer mode cells include a switch command (12), indicative of a change in the activation state of a synchronous transfer mode channel.

21. A system as claimed in Claim 20 in which the switch commands (12) produced by the first and second transmitters are independent of each other.

22. A transmitter configured to transmit asynchronous transfer mode cells (1) in which synchronous transfer mode channels (11) are assembled; **characterized in that** at least some of the asynchronous transfer mode cells include a switch command (12) indicative of a change in the activation state of a synchronous transfer mode channel.

23. A transmitter as claimed in Claim 22 configured such that when more than one synchronous transfer mode channel (11) in an asynchronous transfer mode cell (1) changes activation state the asynchronous transfer mode cell includes a corresponding number of switch commands (12).

24. A transmitter as claimed in Claim 22 in which when no synchronous transfer mode channel (11) in an asynchronous transfer mode cell (1) changes activation state the asynchronous transfer mode cell includes no switch commands (12).

25. A transmitter as claimed in Claim 23 or Claim 24 in which synchronous transfer mode channels (11) and switch commands (12) fill the asynchronous transfer mode cell (1) from opposite ends of the cell.

26. A transmitter as claimed in any of Claims 23 to 25 in which each asynchronous transfer mode cell (1) includes a convergence sublayer indicator bit and the convergence sublayer indicator bit in each asynchronous transfer mode cell is indicative of the presence of switch commands (12) in the cell.

27. A transmitter as claimed in any of Claims 22 to 26 in which the switch commands (12) comprise two bytes, the first including a pointer pointing to the start of a block of synchronous transfer mode channels and the second including a pointer pointing to the channel (11) within the block of synchronous transfer mode channels to which the switch command applies.

28. A transmitter as claimed in Claim 27 in which the first byte further includes a bit indicative of whether any further switch commands are present in the asynchronous transfer mode cell (1).

29. A transmitter as claimed in Claim 27 or Claim 28 in which the second byte further includes data indicative of whether a synchronous transfer mode channel comprises a number of sub channels and if so to which sub channel the switch command applies.

30. A transmitter as claimed in any of Claims 22 to 29 configured to send a resynchronisation command (22) at desired intervals, the resynchronisation command carrying sufficient information to enable the receiver to check the current activation state of all the synchronous transfer mode channels (11).

31. A transmitter as claimed in Claim 30 in which the resynchronisation command (22) comprises a first command indicating that resynchronisation instructions are being transmitted, a series of switch commands (13), one for each active synchronous transfer mode channel (11), and a final command (14) indicating that the resynchronisation instructions are complete.

32. A transmitter as claimed in Claim 30 in which the resynchronisation command (22) comprises a first command indicating that resynchronisation instructions are being transmitted, a series of switch commands (13), one for each inactive synchronous transfer mode channel (11), and a final command (14) indicating that the resynchronisation instructions are complete.

33. A transmitter as claimed in any of Claims 30 to 32 in which the resynchronisation command (22) includes error detection and/or correction.

34. A transmitter as claimed in Claim 33 in which the error detection/correction comprises a cyclic redundancy check code.

35. A transmitter as claimed in any of Claims 31 to 34 in which a switch command (13) for an inactive channel includes a third byte that indicates the value to be assigned by the receiver to that idle channel.

36. A transmitter as claimed in any of Claims 20 to 35, comprising means for monitoring three or more consecutive bytes in each synchronous transfer mode channel (11) and for initiating a switch command (12) for that channel indicating that the channel is now inactive if it was not previously active and the value of the consecutive bytes has not changed.

37. A transmitter as claimed in any of Claims 20 to 36 comprising means for monitoring bytes in each synchronous transfer mode channel (11) and for initiating a switch command (12) for that channel indicating that the channel is now active if it was previously inactive and the current byte value has changed.

38. A transmitter as claimed in any of Claims 20 to 35 comprising means for maintaining a desired minimum number of channels active.

39. A transmitter as claimed in Claim 38 in which the minimum number is user selectable.

40. A receiver for receiving asynchronous transfer mode cells (1) in which synchronous transfer mode channels (11) are assembled; **characterized in that** at least some of the asynchronous transfer mode cells include a switch command (12), the switch command indicative of a change in the activation state of a synchronous transfer mode channel and wherein the receiver is configured to detect from the switch commands those synchronous transfer mode channels that are active and to assemble the synchronous transfer mode channels from successive asynchronous transfer mode cells.

41. A receiver as claimed in Claim 40 in which when more than one synchronous transfer mode channel (11) in an asynchronous transfer mode cell (1) changes activation state a corresponding number of switch commands (12) are included in the asynchronous transfer mode cell.

42. A receiver as claimed in Claim 40 in which when no synchronous transfer mode channel in an asynchronous transfer mode cell (1) changes activation state no switch commands are included in the asynchronous transfer mode cell.

43. A receiver as claimed in Claim 40 or Claim 41 in which synchronous transfer mode channels (11) and switch commands (12) fill the asynchronous transfer mode cell (1) from opposite ends of the cell.

44. A receiver as claimed in any of Claims 40 to 43 in which the convergence sublayer indicator bit in each asynchronous transfer mode cell (1) is used to indicate the presence of switch commands (12) in the cell.

45. A receiver as claimed in any of Claims 40 to 44 in which the switch commands (12) comprise two bytes, the first including a pointer pointing to the start of a block of synchronous transfer mode channels and the second including a pointer pointing to the channel within the block of synchronous transfer mode channels to which the switch command applies.

46. A receiver as claimed in Claim 45 in which the first byte further includes a bit indicating whether any further switch commands (12) are present in the asynchronous transfer mode cell.

47. A receiver as claimed in Claim 45 or Claim 46 in which the second byte further includes data indicating whether a synchronous transfer mode channel (11) comprises a number of sub channels and if so to which sub channel the switch command (12) applies.

48. A receiver as claimed in any of Claims 40 to 47 which, when a resynchronisation command (22) carrying sufficient information is sent at desired intervals, is configured to check the current activation state of all the synchronous transfer mode channels (11).

49. A receiver as claimed in Claim 48 in which the resynchronisation command (22) comprises a first command indicating that resynchronisation instructions are being transmitted, a series of switch commands (12), one for each active synchronous transfer mode channel (11), and a final command (14) indicating that the resynchronisation instructions are complete.

50. A receiver as claimed in Claim 48 in which the resynchronisation command (22) comprises a first command indicating that resynchronisation instructions are being transmitted, a series of switch commands (13), one for each inactive synchronous transfer mode channel (11), and a final command (14) indicating that the resynchronisation instructions are complete.

51. A receiver as claimed in any of Claims 48 to 50 in which the resynchronisation command (22) includes error detection and/or correction.

52. A receiver as claimed in Claim 51 in which the error detection/correction comprises a cyclic redundancy check code.

53. A receiver as claimed in any of Claims 50 to 52 in which a switch command for an inactive channel includes a third byte that indicates the value to be assigned by the receiver to that idle channel.

54. A communications method comprising the steps of:
packing a synchronous transfer mode frame comprising a plurality of channels (11) into asynchronous transfer mode cells (1) for transmission, **characterized by**
inserting into each asynchronous transfer mode cell (1) in which the activation state of a synchronous transfer mode channel (11) changes, a switch command (12) indicating whether a single synchronous transfer mode channel is active or inactive,
transmitting the asynchronous transfer mode cells (1) including the switch commands (12), and
on reception of the asynchronous transfer mode cells (1) using the switch command (12) to enable the unpacking of the synchronous transfer mode channels (11) from the asynchronous transfer mode packets.

55. A method as claimed in Claim 54 comprising the step of, when the activation state of more than one synchronous transfer mode channel (11) changes, including a corresponding number of switch commands (12) in that asynchronous transfer mode cell, one for each channel changing state.

56. A method as claimed in Claim 54 or Claim 55 comprising the step of inserting synchronous transfer mode channels (11) into an asynchronous transfer mode cell (1) starting from one end and inserting the switch commands (12) into the asynchronous transfer mode packet starting from the other end.

57. A method as claimed in any of Claims 54 to 56 in which the switch command (12) comprises two bytes, a first byte containing an offset value (18) identifying the start of a synchronous transfer mode frame (11) in the asynchronous transfer mode cell and a second byte (19) identifying the channel within the synchronous transfer mode frame to which the switch command corresponds.

58. A method as claimed in Claim 57 in which one of the bytes includes a bit that indicates whether the switch command is the last one within the asynchronous transfer mode cell.

59. A method as claimed in Claim 57 or Claim 58 in which one of the bytes includes three bits identifying a particular bit or combination of bits within the channel identified by the second byte.

60. A method as claimed in any of Claims 54 to 59 in which the switch command acts to change the activation state of a synchronous transfer mode channel.

61. A method as claimed in any of Claims 54 to 60 in which a resynchronisation packages (22) are sent at given intervals, the resynchronisation packages containing sufficient information to identify all currently active channels.

62. A method as claimed in Claim 61 in which the resynchronisation package (22) comprises a first resynchronisation command (14) followed by a sufficient number of switch commands (13) to enable all active channels to be identified and terminated by a further resynchronisation command (14).

63. A method as claimed in any of Claims 54 to 62 comprising the further steps of:
monitoring the state of three or more consecutive bytes in each synchronous transfer mode channel, and
initiating a switch command for that channel indicating that the channel is now inactive if it was previously active and the value of the consecutive bytes has not changed.

64. A method as claimed in any of Claims 54 to 62 comprising the further steps of:
monitoring the state of three or more consecutive bytes in each synchronous transfer mode channel, and
initiating a switch command for that channel indicating that the channel is now active if it was previously inactive and the value of the current byte has changed.

65. A method as claimed in any of Claims 54 to 64 comprising the further step of maintaining a minimum number of synchronous transfer mode channels active.

66. A method as claimed in Claim 65 in which the minimum number is user programmable.

67. A method of transmitting asynchronous transfer mode cells (1) in which synchronous transfer mode channels (11) are assembled **characterized by** the step of including a switch command (12) in at least some of the asynchronous transfer mode cells, the switch command (12) indicating a change in the activation state of a synchronous transfer mode channel (11).

68. A method as claimed in Claim 67 in which when more than one synchronous transfer mode channel (11) in an asynchronous transfer mode cell changes activation state a corresponding number of switch commands (12) are included in the asynchronous transfer mode cell.

69. A method as claimed in Claim 67 in which when no synchronous transfer mode channel in an asynchronous transfer mode cell changes activation state no switch commands are included in the asynchronous transfer mode cell.

70. A method as claimed in Claim 68 or Claim 69 in which synchronous transfer mode channels (11) and switch commands (12) fill the asynchronous transfer mode cell from opposite ends of the cell.

71. A method as claimed in any of Claims 67 to 70 in which the each asynchronous transfer mode cell includes a convergence sublayer indicator bit and the convergence sublayer indicator bit in each asynchronous transfer mode cell is used to indicate the presence of switch commands in the cell.

72. A method as claimed in any of Claims 67 to 71 in which the switch commands comprise two bytes, the first byte including a pointer (18) pointing to the start of a block of synchronous transfer mode channels (11) and the second byte including a pointer (19) pointing to the channel within the block of synchronous transfer mode channels to which the switch command (12) applies.

73. A method as claimed in Claim 72 in which the first byte further includes a bit indicating whether any further switch commands (12) are present in the asynchronous transfer mode cell (1).

74. A method as claimed in Claim 72 or Claim 73 in which the second byte further includes data indicating whether a synchronous transfer mode channel comprises a number of sub channels and if so to which sub channel the switch command (12) applies.

75. A method as claimed in any of Claims 67 to 74 in which a resynchronisation command (22) is sent at desired intervals, the resynchronisation command carrying sufficient information to enable the receiver to check the current activation state of all the synchronous transfer mode channels (11).

76. A method as claimed in Claim 75 in which the resynchronisation command (22) comprises a first command (14) indicating that resynchronisation instructions are being transmitted, a series of switch commands (13), one for each active synchronous transfer mode channel, and a final command (14) indicating that the resynchronisation instructions are complete.

77. A method as claimed in Claim 76 in which the resynchronisation command (22) comprises a first command (14) indicating that resynchronisation instructions are being transmitted, a series of switch commands (13), one for each inactive synchronous transfer mode channel, and a final command (14) indicating that the resynchronisation instructions are complete.

78. A method as claimed in any of Claims 75 to 77 in which the resynchronisation command (22) includes error detection and/or correction.

79. A method as claimed in Claim 78 in which the error detection/correction comprises a cyclic redundancy check code.

80. A method as claimed in any of Claims 76 to 79 in which a switch command (13) for an inactive channel includes a third byte that indicates the value to be assigned by the receiver to that idle channel.

81. A method as claimed in any of Claims 67 to 80 comprising the further steps of:
monitoring the state of three or more consecutive bytes of each synchronous transfer mode channel (11), and
initiating a switch command (12) for that channel indicating that the channel is now inactive if it was not previously active and the value of the consecutive bytes has not changed.

82. A method as claimed in any of Claims 67 to 80 comprising the further steps of:
monitoring the state of three or more consecutive bytes of each synchronous transfer mode channel (11), and
initiating a switch command (12) for that channel indicating that the channel is now active if it was not inactive and the value of the current byte has changed.

83. A method as claimed in any of Claims 67 to 82 comprising the further step of maintaining a minimum number of synchronous transfer mode channels active.

84. A method as claimed in Claim 83 in which the minimum number is programmable.

85. A method of receiving for receiving synchronous transfer mode channels (11) assembled in asynchronous transfer mode cells (1) **characterized in that** at least some of the cells include a switch command (12), the switch command indicating a change in the activation state of a synchronous transfer mode channel the method comprising the steps of:
detecting from the switch commands (12) those synchronous transfer mode channels that are active, and
assembling the synchronous transfer mode channels (11) from successive asynchronous transfer mode cells (1) using the state of the synchronous transfer mode channels derived from the switch commands.

86. A method as claimed in Claim 85 in which when more than one synchronous transfer mode channel (11) in an asynchronous transfer mode cell (1) changes activation state a corresponding number of switch commands (12) are included in the asynchronous transfer mode cell.

87. A method as claimed in Claim 85 in which when no synchronous transfer mode channel in an asynchronous transfer mode cell changes activation state no switch commands are included in the asynchronous transfer mode cell (1).

88. A method as claimed in Claim 85 or Claim 86 in which synchronous transfer mode channels (11) and switch commands (12) fill the asynchronous transfer mode cell (1) from opposite ends of the cell.

89. A method as claimed in any of Claims 85 to 88 in which the convergence sublayer indicator bit in each asynchronous transfer mode cell is used to indicate the presence of switch commands in the cell.

90. A method as claimed in any of Claims 85 to 89 in which the switch commands (12) comprise two bytes, the first including a pointer (18) pointing to the start of a block of synchronous transfer mode channels and the second including a pointer (19) pointing to the channel within the block of synchronous transfer mode channels (11) to which the switch command (12) applies.

91. A method as claimed in Claim 90 in which the first byte further includes a bit indicating whether any further switch commands are present in the asynchronous transfer mode cell.

92. A method as claimed in Claim 90 or Claim 91 in which the second byte further includes data indicating whether a synchronous transfer mode channel comprises a number of sub channels and if so to which sub channel the switch command applies.

93. A method as claimed in any of Claims 85 to 92 in which a resynchronisation command (22) is sent at desired intervals, comprising the step of to checking the current activation state of all the synchronous transfer mode channels (11), the resynchronisation command carrying sufficient information to enable the method to establish the state of all the synchronous transfer mode channels.

94. A method as claimed in Claim 93 in which the resynchronisation command (22) comprises a first command (14) indicating that resynchronisation instructions are being transmitted, a series of switch commands (13), one for each active synchronous transfer mode channel (11), and a final command (14) indicating that the resynchronisation instructions are complete.

95. A method as claimed in Claim 93 in which the resynchronisation command (22) comprises a first command (14) indicating that resynchronisation instructions are being transmitted, a series of switch commands (13), one for each inactive synchronous transfer mode channel, and a final command (14) indicating that the resynchronisation instructions are complete.

96. A method as claimed in any of Claims 93 to 95 in which the resynchronisation command (22) includes error detection and/or correction, the method further comprising the step of checking and/or correcting the resynchronisation command.

97. A method as claimed in Claim 96 in which the error detection/correction comprises a cyclic redundancy check code.

98. A method as claimed in any of Claims 95 to 97 in which a switch command (12) for an inactive channel includes a third byte that indicates the value to be assigned by the receiver to that idle channel, comprising the further step of allocating that value to the received idle channel.

## Patentansprüche

1. Kommunikationssystem, umfassend einen Sender, einen Empfänger und ein Übertragungsmedium zwischen dem Sender und dem Empfänger, wobei der Sender zum Übertragen von Asynchronous Transfer Mode-Zellen (1) konfiguriert ist, in denen Synchronous Transfer Mode-Kanäle (11) zusammengesetzt sind, **dadurch gekennzeichnet, dass** der Sender so konfiguriert ist, dass wenigstens einige der Asynchronous Transfer Mode-Zellen einen Schaltbefehl (12) aufweisen, der eine Änderung des Aktivierungsstatus eines Synchronous Transfer Mode-Kanals anzeigt.

2. System nach Anspruch 1, bei dem, wenn mehr als ein Synchronous Transfer Mode-Kanal in einer Asynchronous Transfer Mode-Zelle den Aktivierungsstatus ändert, eine entsprechende Anzahl von Schaltbefehlen (12) in die Asynchronous Transfer Mode-Zelle (1) eingefügt wird.

3. System nach Anspruch 1, bei dem, wenn kein Synchronous Transfer Mode-Kanal in einer Asynchronous Transfer Mode-Zelle den Aktivierungsstatus ändert, keine Schaltbefehle in die Asynchronous Transfer Mode-Zelle (1) eingefügt werden.

4. System nach Anspruch 1 oder Anspruch 2, bei dem Synchronous Transfer Mode-Kanäle (11) und Schaltbefehle (12) die Asynchronous Transfer Mode-Zelle (1) von entgegengesetzten Enden der Zelle füllen.

5. System nach einem der vorhergehenden Ansprüche, bei dem das Konvergenz-Teilschicht-Anzeigebit in jeder Asynchronous Transfer Mode-Zelle (1) zum Anzeigen des Vorhandenseins von Schaltbefehlen (12) in der Zelle verwendet wird.

6. System nach einem der vorhergehenden Ansprüche, bei dem die Schaltbefehle (12) zwei Bytes umfassen, wobei das erste einen Zeiger (18) aufweist, der auf den Anfang eines Blocks von Synchronous Transfer Mode-Kanälen verweist, und das zweite einen Zeiger (19) aufweist, der auf den Kanal in dem Block von Synchronous Transfer Mode-Kanälen verweist, auf den sich der Schaltbefehl bezieht.

7. System nach einem der vorhergehenden Ansprüche, bei dem der Schaltbefehl (12) drei Bytes umfasst, wobei das dritte Byte einen oder mehrere Fehlererkennungs-/-korrekturbits zur Erkennung/Korrektur von Fehlern in den Daten in dem ersten und/oder zweiten Byte aufweist.

8. System nach Anspruch 6 oder Anspruch 7, bei dem das erste Byte ferner ein Bit aufweist, das anzeigt, ob in der Asynchronous Transfer Mode-Zelle weitere Schaltbefehle vorhanden sind.

9. System nach einem der Ansprüche 6 bis 8, bei dem das zweite Byte ferner Daten aufweist, die anzeigen, ob ein Synchronous Transfer Mode-Kanal eine Anzahl von Unterkanälen aufweist und, wenn ja, auf welchen Unterkanal sich der Schaltbefehl bezieht.

10. System nach einem der vorhergehenden Ansprüche, bei dem der Sender zum Senden eines Neusynchronisationsbefehls (22) in gewünschten Intervallen konfiguriert ist, wobei der Neusynchronisationsbefehl ausreichend Informationen enthält, so dass der Empfänger den aktuellen Aktivierungsstatus aller Synchronous Transfer Mode-Kanäle prüfen kann.

11. System nach Anspruch 10, bei dem der Neusynchronisationsbefehl (22) einen ersten Befehl (14), der anzeigt, dass Neusynchronisationsanweisungen übertragen werden, eine Reihe von Schaltbefehlen (15), je einen für jeden aktiven Synchronous Transfer Mode-Kanal, und einen Schlussbefehl (14), der anzeigt, dass die Neusynchronisationsanweisungen vollständig sind, umfasst.

12. System nach Anspruch 10, bei dem der Neusynchronisationsbefehl (22) einen ersten Befehl (14), der anzeigt, dass Neusynchronisationsanweisungen übertragen werden, eine Reihe von Schaltbefehlen (13), je einen für jeden inaktiven Synchronous Transfer Mode-Kanal, und einen Schlussbefehl (14), der anzeigt, dass die Neusynchronisationsanweisungen vollständig sind, umfasst.

13. System nach einem der Ansprüche 10 bis 12, bei dem der Neusynchronisationsbefehl (22) Fehlererkennung und/oder - korrektur aufweist.

14. System nach Anspruch 13, bei dem die Fehlererkennung/- korrektur einen Code für zyklische Blockprüfung umfasst.

15. System nach einem der Ansprüche 12 bis 14, bei dem ein Schaltbefehl (12) für einen inaktiven Kanal ein drittes Byte aufweist, das den Wert anzeigt, der diesem ungenutzten Kanal vom Empfänger zuzuweisen ist.

16. System nach einem der vorhergehenden Ansprüche, umfassend Mittel zum Überwachen von drei oder mehr aufeinanderfolgenden Bytes in jedem Synchronous Transfer Mode-Kanal und zum Einleiten eines Schaltbefehls für diesen Kanal, der anzeigt, dass der Kanal jetzt inaktiv ist, wenn er zuvor aktiv war, und sich der Wert der aufeinanderfolgenden Bytes nicht geändert hat.

17. System nach einem der vorhergehenden Ansprüche, umfassend Mittel zum Überwachen von Bytes in jedem Synchronous Transfer Mode-Kanal und zum Einleiten eines Schaltbefehls für diesen Kanal, der anzeigt, dass der Kanal jetzt aktiv ist, wenn er zuvor inaktiv war, und sich der aktuelle Bytewert geändert hat.

18. System nach einem der vorhergehenden Ansprüche, umfassend Mittel zum Aktivhalten einer gewünschten Mindestzahl von Kanälen.

19. System nach Anspruch 18, umfassend Mittel zum Ermöglichen, dass die Mindestzahl benutzerwählbar ist.

20. System nach einem der vorhergehenden Ansprüche, umfassend erste und zweite Endgeräte, die jeweils einen Sender und einen Empfänger umfassen, und ein Übertragungsmedium zwischen den Sendern und Empfängern, wobei jeder Sender zum Übertragen von Asynchronous Transfer Mode-Zellen (1) konfiguriert ist, in denen Synchronous Transfer Mode-Kanäle (11) zusammengesetzt sind; wobei die Sender so konfiguriert sind, dass wenigstens einige der Asynchronous Transfer Mode-Zellen einen Schaltbefehl (12) aufweisen, der eine Änderung des Aktivierungsstatus eines Synchronous Transfer Mode-Kanals anzeigt.

21. System nach Anspruch 20, bei dem die von den ersten und zweiten Sendern erzeugten Schaltbefehle (12) voneinander unabhängig sind.

22. Sender, der zum Übertragen von Asynchronous Transfer Mode-Zellen (1) konfiguriert ist, in denen Synchronous Transfer Mode-Kanäle (11) zusammengesetzt sind, **dadurch gekennzeichnet, dass** wenigstens einige der Asynchronous Transfer Mode-Zellen einen Schaltbefehl (12) aufweisen, der eine Änderung des Aktivierungsstatus eines Synchronous Transfer Mode-Kanals anzeigt.

23. Sender nach Anspruch 22, der so konfiguriert ist, dass, wenn mehr als ein Synchronous Transfer Mode-Kanal (11) in einer Asynchronous Transfer Mode-Zelle (1) den Aktivierungsstatus ändert, eine entsprechende Anzahl von Schaltbefehlen (12) in die Asynchronous Transfer Mode-Zelle eingefügt wird.

24. Sender nach Anspruch 22, bei dem, wenn kein Synchronous Transfer Mode-Kanal (11) in einer Asynchronous Transfer Mode-Zelle (1) den Aktivierungsstatus ändert, keine Schaltbefehle (12) in die Asynchronous Transfer Mode-Zelle eingefügt werden.

25. Sender nach Anspruch 23 oder Anspruch 24, bei dem Synchronous Transfer Mode-Kanäle (11) und Schaltbefehle (12) die Asynchronous Transfer Mode-Zelle (1) von entgegengesetzten Enden der Zelle füllen.

26. Sender nach einem der Ansprüche 23 bis 25, bei dem jede Asynchronous Transfer Mode-Zelle (1) ein Konvergenz-Teilschicht-Anzeigebit aufweist und das Konvergenz-Teilschicht-Anzeigebit in jeder Asynchronous Transfer Mode-Zelle das Vorhandensein von Schaltbefehlen (12) in der Zelle anzeigt.

27. Sender nach einem der Ansprüche 22 bis 26, bei dem die Schaltbefehle (12) zwei Bytes umfassen, wobei das erste einen Zeiger aufweist, der auf den Anfang eines Blocks von Synchronous Transfer Mode-Kanälen verweist, und das zweite einen Zeiger aufweist, der auf den Kanal (11) in dem Block von Synchronous Transfer Mode-Kanälen verweist, auf den sich der Schaltbefehl bezieht.

28. Sender nach Anspruch 27, bei dem das erste Byte ferner ein Bit aufweist, das anzeigt, ob in der Asynchronous Transfer Mode-Zelle (1) weitere Schaltbefehle vorhanden sind.

29. Sender nach Anspruch 27 oder Anspruch 28, bei dem das zweite Byte ferner Daten aufweist, die anzeigen, ob ein Synchronous Transfer Mode-Kanal eine Anzahl von Unterkanälen aufweist und, wenn ja, auf welchen Unterkanal sich der Schaltbefehl bezieht.

30. Sender nach einem der Ansprüche 22 bis 29, der zum Senden eines Neusynchronisationsbefehls (22) in gewünschten Intervallen konfiguriert ist, wobei der Neusynchronisationsbefehl ausreichend Informationen enthält, so dass der Empfänger den aktuellen Aktivierungsstatus aller Synchronous Transfer Mode-Kanäle (11) prüfen kann.

31. Sender nach Anspruch 30, bei dem der Neusynchronisationsbefehl (22) einen ersten Befehl, der anzeigt, dass Neusynchronisationsanweisungen übertragen werden, eine Reihe von Schaltbefehlen (13), je einen für jeden aktiven Synchronous Transfer Mode-Kanal (11), und einen Schlussbefehl (14), der anzeigt, dass die Neusynchronisationsanweisungen vollständig sind, umfasst.

32. Sender nach Anspruch 30, bei dem der Neusynchronisationsbefehl (22) einen ersten Befehl, der anzeigt, dass Neusynchronisationsanweisungen übertragen werden, eine Reihe von Schaltbefehlen (13), je einen für jeden inaktiven Synchronous Transfer Mode-Kanal (11), und einen Schlussbefehl (14), der anzeigt, dass die Neusynchronisationsanweisungen vollständig sind, umfasst.

33. Sender nach einem der Ansprüche 30 bis 32, bei dem der Neusynchronisationsbefehl (22) Fehlererkennung und/oder - korrektur aufweist.

34. Sender nach Anspruch 33, bei dem die Fehlererkennung/- korrektur einen Code für zyklische Blockprüfung umfasst.

35. Sender nach einem der Ansprüche 31 bis 34, bei dem ein Schaltbefehl (13) für einen inaktiven Kanal ein drittes Byte aufweist, das den Wert anzeigt, der diesem ungenutzten Kanal vom Empfänger zuzuweisen ist.

36. Sender nach einem der Ansprüche 20 bis 35, umfassend Mittel zum Überwachen von drei oder mehr aufeinanderfolgenden Bytes in jedem Synchronous Transfer Mode-Kanal (11) und zum Einleiten eines Schaltbefehls (12) für diesen Kanal, der anzeigt, dass der Kanal jetzt inaktiv ist, wenn er zuvor nicht aktiv war, und sich der Wert der aufeinanderfolgenden Bytes nicht geändert hat.

37. Sender nach einem der Ansprüche 20 bis 36, umfassend Mittel zum Überwachen von Bytes in jedem Synchronous Transfer Mode-Kanal (11) und zum Einleiten eines Schaltbefehls (12) für diesen Kanal, der anzeigt, dass der Kanal jetzt aktiv ist, wenn er zuvor inaktiv war, und sich der aktuelle Bytewert geändert hat.

38. Sender nach einem der Ansprüche 20 bis 35, umfassend Mittel zum Aktivhalten einer gewünschten Mindestzahl von Kanälen.

39. Sender nach Anspruch 38, bei dem die Mindestzahl benutzerwählbar ist.

40. Empfänger zum Empfangen von Asynchronous Transfer Mode-Zellen (1), in denen Synchronous Transfer Mode-Kanäle (11) zusammengesetzt sind, **dadurch gekennzeichnet, dass** wenigstens einige der Asynchronous Transfer Mode-Zellen einen Schaltbefehl (12) aufweisen, wobei der Schaltbefehl eine Änderung des Aktivierungsstatus eines Synchronous Transfer Mode-Kanals anzeigt, und wobei der Empfänger konfiguriert ist, um anhand der Schaltbefehle jene Synchronous Transfer Mode-Kanäle zu erkennen, die aktiv sind, und die Synchronous Transfer Mode-Kanäle aus aufeinanderfolgenden Asynchronous Transfer Mode-Zellen zusammenzusetzen.

41. Empfänger nach Anspruch 40, bei dem, wenn mehr als ein Synchronous Transfer Mode-Kanal (11) in einer Asynchronous Transfer Mode-Zelle (1) den Aktivierungsstatus ändert, eine entsprechende Anzahl von Schaltbefehlen (12) in die Asynchronous Transfer Mode-Zelle eingefügt wird.

42. Empfänger nach Anspruch 40, bei dem, wenn kein Synchronous Transfer Mode-Kanal in einer Asynchronous Transfer Mode-Zelle (1) den Aktivierungsstatus ändert, keine Schaltbefehle (12) in die Asynchronous Transfer Mode-Zelle eingefügt werden.

43. Empfänger nach Anspruch 40 oder Anspruch 41, bei dem Synchronous Transfer Mode-Kanäle (11) und Schaltbefehle (12) die Asynchronous Transfer Mode-Zelle (1) von entgegengesetzten Enden der Zelle füllen.

44. Empfänger nach einem der Ansprüche 40 bis 43, bei dem das Konvergenz-Teilschicht-Anzeigebit in jeder Asynchronous Transfer Mode-Zelle (1) zum Anzeigen des Vorhandenseins von Schaltbefehlen (12) in der Zelle verwendet wird.

45. Empfänger nach einem der Ansprüche 40 bis 44, bei dem die Schaltbefehle (12) zwei Bytes umfassen, wobei das erste einen Zeiger aufweist, der auf den Anfang eines Blocks von Synchronous Transfer Mode-Kanälen verweist, und das zweite einen Zeiger aufweist, der auf den Kanal in dem Block von Synchronous Transfer Mode-Kanälen verweist, auf den sich der Schaltbefehl bezieht.

46. Empfänger nach Anspruch 45, bei dem das erste Byte ferner ein Bit-aufweist, das anzeigt, ob in der Asynchronous Transfer Mode-Zelle (11) weitere Schaltbefehle (12) vorhanden sind.

47. Empfänger nach Anspruch 45 oder Anspruch 46, bei dem das zweite Byte ferner Daten aufweist, die anzeigen, ob ein Synchronous Transfer Mode-Kanal (11) eine Anzahl von Unterkanälen aufweist und, wenn ja, auf welchen Unterkanal sich der Schaltbefehl (12) bezieht.

48. Empfänger nach einem der Ansprüche 40 bis 47, der konfiguriert ist, um, wenn ein Neusynchronisationsbefehl (22), der ausreichend Informationen enthält, in gewünschten Intervallen gesendet wird, den aktuellen Aktivierungsstatus von allen Synchronous Transfer Mode-Kanälen (11) zu prüfen.

49. Empfänger nach Anspruch 48, bei dem der Neusynchronisationsbefehl (22) einen ersten Befehl, der anzeigt, dass Neusynchronisationsanweisungen übertragen werden, eine Reihe von Schaltbefehlen (12), je einen für jeden aktiven Synchronous Transfer Mode-Kanal (11), und einen Schlussbefehl (14), der anzeigt, dass die Neusynchronisationsanweisungen vollständig sind, umfasst.

50. Empfänger nach Anspruch 48, bei dem der Neusynchronisationsbefehl (22) einen ersten Befehl, der anzeigt, dass Neusynchronisationsanweisungen übertragen werden, eine Reihe von Schaltbefehlen (13), je einen für jeden inaktiven Synchronous Transfer Mode-Kanal (11), und einen Schlussbefehl (14), der anzeigt, dass die Neusynchronisationsanweisungen vollständig sind, umfasst.

51. Empfänger nach einem der Ansprüche 48 bis 50, bei dem der Neusynchronisationsbefehl (22) Fehlererkennung und/oder - korrektur aufweist.

52. Empfänger nach Anspruch 51, bei dem die Fehlererkennung/- korrektur einen Code für zyklische Blockprüfung umfasst.

53. Empfänger nach einem der Ansprüche 50 bis 52, bei dem ein Schaltbefehl für einen inaktiven Kanal ein drittes Byte aufweist, das den Wert anzeigt, der diesem ungenutzten Kanal vom Empfänger zuzuweisen ist.

54. Kommunikationsverfahren, das die folgenden Schritte umfasst:
Einpacken eines Synchronous Transfer Mode-Frames, umfassend eine Vielzahl von Kanälen (11), in Asynchronous Transfer Mode-Zellen (1) zur Übertragung, **gekennzeichnet durch**
Einsetzen eines Schaltbefehls (12), der anzeigt, ob ein einzelner Synchronous Transfer Mode-Kanal aktiv oder inaktiv ist, in jede Asynchronous Transfer Mode-Zelle (1), in welcher sich der Aktivierungsstatus eines Synchronous Transfer Mode-Kanals (11) ändert,
Senden der die Schaltbefehle (12) aufweisenden Asynchronous Transfer Mode-Zellen (1) und
bei Erhalt der Asynchronous Transfer Mode-Zellen (1) Verwenden des Schaltbefehls (12), um das Auspacken der Synchronous Transfer Mode-Kanäle (11) aus den Asynchronous Transfer Mode-Paketen zu ermöglichen.

55. Verfahren nach Anspruch 54, umfassend den folgenden Schritt: wenn sich der Aktivierungsstatus von mehr als einem Synchronous Transfer Mode-Kanal (11) ändert, Einfügen einer entsprechenden Zahl von Schaltbefehlen (12) in diese Asynchronous Transfer Mode-Zelle, je einen für jeden Kanaländerungsstatus.

56. Verfahren nach Anspruch 54 oder Anspruch 55, umfassend den Schritt des Einsetzens von Synchronous Transfer Mode-Kanälen (11) in eine Asynchronous Transfer Mode-Zelle (1) ausgehend von einem Ende und des Einsetzens der Schaltbefehle (12) in das Asynchronous Transfer Mode-Paket ausgehend von dem anderen Ende.

57. Verfahren nach einem der Ansprüche 54 bis 56, bei dem der Schaltbefehl (12) zwei Bytes umfasst, ein erstes Byte, das einen Offset-Wert (18) enthält, der den Anfang eines Synchronous Transfer Mode-Frames (11) in der Asynchronous Transfer Mode-Zelle kennzeichnet, und ein zweites Byte (19), das den Kanal in dem Synchronous Transfer Mode-Frame kennzeichnet, dem der Schaltbefehl entspricht.

58. Verfahren nach Anspruch 57, bei dem eines der Bytes ein Bit aufweist, das anzeigt, ob der Schaltbefehl der letzte in der Asynchronous Transfer Mode-Zelle ist.

59. Verfahren nach Anspruch 57 oder Anspruch 58, bei dem eines der Bytes drei Bits aufweist, die ein besonderes Bit oder eine besondere Bit-Kombination in dem Kanal kennzeichnen, der von dem zweiten Byte **gekennzeichnet** wird.

60. Verfahren nach einem der Ansprüche 54 bis 59, bei dem der Schaltbefehl die Änderung des Aktivierungsstatus eines Synchronous Transfer Mode-Kanals bewirkt.

61. Verfahren nach einem der Ansprüche 54 bis 60, bei dem Neusynchronisationspakete (22) in bestimmten Intervallen gesendet werden, wobei die Neusynchronisationspakete ausreichend Informationen enthalten, um alle aktuell aktiven Kanäle zu identifizieren.

62. Verfahren nach Anspruch 61, bei dem das Neusynchronisationspaket (22) einen ersten Neusynchronisationsbefehl (14), gefolgt von einer ausreichenden Anzahl von Schaltbefehlen (13) umfasst, damit alle aktiven Kanäle identifiziert und durch einen weiteren Neusynchronisationsbefehl (14) beendet werden können.

63. Verfahren nach einem der Ansprüche 54 bis 62, umfassend die folgenden weiteren Schritte:
Überwachen des Zustands von drei oder mehr aufeinanderfolgenden Bytes in jedem Synchronous Transfer Mode-Kanal und
Einleiten eines Schaltbefehls für diesen Kanal, der anzeigt, dass der Kanal jetzt inaktiv ist, wenn er zuvor aktiv war, und sich der Wert der aufeinanderfolgenden Bytes nicht geändert hat.

64. Verfahren nach einem der Ansprüche 54 bis 62, ferner umfassend die folgenden weiteren Schritte:
Überwachen des Zustands von drei oder mehr aufeinanderfolgenden Bytes in jedem Synchronous Transfer Mode-Kanal und
Einleiten eines Schaltbefehls für diesen Kanal, der anzeigt, dass der Kanal jetzt aktiv ist, wenn er zuvor inaktiv war, und sich der Wert des aktuellen Bytes geändert hat.

65. Verfahren nach einem der Ansprüche 54 bis 64, ferner umfassend den weiteren Schritt des Aktivhaltens einer Mindestzahl von Synchronous Transfer Mode-Kanälen.

66. Verfahren nach Anspruch 65, bei dem die Mindestzahl vom Benutzer programmierbar ist.

67. Verfahren zum Senden von Asynchronous Transfer Mode-Zellen (1), in denen Synchronous Transfer Mode-Kanäle (11) zusammengesetzt sind, **gekennzeichnet durch** den Schritt des Einfügens eines Schaltbefehls (12) in wenigstens einige der Asynchronous Transfer Mode-Zellen, wobei der Schaltbefehl (12) eine Änderung des Aktivierungsstatus eines Synchronous Transfer Mode-Kanals (11) anzeigt.

68. Verfahren nach Anspruch 67, bei dem, wenn mehr als ein Synchronous Transfer Mode-Kanal (11) in einer Asynchronous Transfer Mode-Zelle den Aktivierungsstatus ändert, eine entsprechende Anzahl von Schaltbefehlen (12) in die Asynchronous Transfer Mode-Zelle eingefügt wird.

69. Verfahren nach Anspruch 67, bei dem, wenn kein Synchronous Transfer Mode-Kanal in einer Asynchronous Transfer Mode-Zelle den Aktivierungsstatus ändert, keine Schaltbefehle in die Asynchronous Transfer Mode-Zelle eingefügt werden.

70. Verfahren nach Anspruch 68 oder 69, bei dem Synchronous Transfer Mode-Kanäle (11) und Schaltbefehle (12) die Asynchronous Transfer Mode-Zelle (1) von entgegengesetzten Enden der Zelle füllen.

71. Verfahren nach einem der Ansprüche 67 bis 70, bei dem jede Asynchronous Transfer Mode-Zelle ein Konvergenz-Teilschicht-Anzeigebit aufweist und das Konvergenz-Teilschicht-Anzeigebit in jeder Asynchronous Transfer Mode-Zelle zum Anzeigen des Vorhandenseins von Schaltbefehlen in der Zelle verwendet wird.

72. Verfahren nach einem der Ansprüche 67 bis 71, bei dem die Schaltbefehle zwei Bytes umfassen, wobei das erste Byte einen Zeiger (18) aufweist, der auf den Anfang eines Blocks von Synchronous Transfer Mode-Kanälen (11) verweist, und das zweite Byte einen Zeiger (19) aufweist, der auf den Kanal in dem Block von Synchronous Transfer Mode-Kanälen verweist, auf den sich der Schaltbefehl bezieht.

73. Verfahren nach Anspruch 72, bei dem das erste Byte ferner ein Bit aufweist, das anzeigt, ob in der Asynchronous Transfer Mode-Zelle (1) weitere Schaltbefehle (12) vorhanden sind.

74. Verfahren nach Anspruch 72 oder Anspruch 73, bei dem das zweite Byte ferner Daten aufweist, die anzeigen, ob ein Synchronous Transfer Mode-Kanal eine Anzahl von Unterkanälen aufweist und, wenn ja, auf welchen Unterkanal sich der Schaltbefehl (12) bezieht.

75. Verfahren nach einem der Ansprüche 67 bis 74, bei dem in gewünschten Intervallen ein Neusynchronisationsbefehl (22) gesendet wird, wobei der Neusynchronisationsbefehl ausreichend Informationen enthält, so dass der Empfänger den aktuellen Aktivierungsstatus aller Synchronous Transfer Mode-Kanäle (11) prüfen kann.

76. Verfahren nach Anspruch 75, bei dem der Neusynchronisationsbefehl (22) einen ersten Befehl (14), der anzeigt, dass Neusynchronisationsanweisungen übertragen werden, eine Reihe von Schaltbefehlen (13), je einen für jeden aktiven Synchronous Transfer Mode-Kanal, und einen Schlussbefehl (14), der anzeigt, dass die Neusynchronisationsanweisungen vollständig sind, umfasst.

77. Verfahren nach Anspruch 76, bei dem der Neusynchronisationsbefehl (22) einen ersten Befehl (14), der anzeigt, dass Neusynchronisationsanweisungen übertragen werden, eine Reihe von Schaltbefehlen (13), je einen für jeden inaktiven Synchronous Transfer Mode-Kanal, und einen Schlussbefehl (14), der anzeigt, dass die Neusynchronisationsanweisungen vollständig sind, umfasst.

78. Verfahren nach einem der Ansprüche 75 bis 77, bei dem der Neusynchronisationsbefehl (22) Fehlererkennung und/oder - korrektur aufweist.

79. Verfahren nach Anspruch 78, bei dem die Fehlererkennung/- korrektur einen Code für zyklische Blockprüfung umfasst.

80. Verfahren nach einem der Ansprüche 76 bis 79, bei dem ein Schaltbefehl (13) für einen inaktiven Kanal ein drittes Byte aufweist, das den Wert anzeigt, der diesem ungenutzten Kanal vom Empfänger zuzuweisen ist.

81. Verfahren nach einem der Ansprüche 67 bis 80, das die folgenden weiteren Schritte umfasst:
Überwachen des Zustands von drei oder mehr aufeinanderfolgenden Bytes von jedem Synchronous Transfer Mode-Kanal (11) und
Einleiten eines Schaltbefehls (12) für diesen Kanal, der anzeigt, dass der Kanal jetzt inaktiv ist, wenn er zuvor nicht aktiv war, und sich der Wert des aktuellen Bytes nicht geändert hat.

82. Verfahren nach einem der Ansprüche 67 bis 80, ferner umfassend die folgenden weiteren Schritte:
Überwachen des Zustands von drei oder mehr aufeinanderfolgenden Bytes von jedem Synchronous Transfer Mode-Kanal (11) und
Einleiten eines Schaltbefehls (12) für diesen Kanal, der anzeigt, dass der Kanal jetzt aktiv ist, wenn er nicht inaktiv war, und sich der Wert des aktuellen Bytes geändert hat.

83. Verfahren nach einem der Ansprüche 67 bis 82, umfassend den weiteren Schritt des Aktivhaltens einer Mindestzahl von Synchronous Transfer Mode-Kanälen.

84. Verfahren nach Anspruch 83, bei dem die Mindestzahl programmierbar ist.

85. Verfahren zum Empfangen von Synchronous Transfer Mode-Kanälen (11), die in Asynchronous Transfer Mode-Zellen (1) zusammengesetzt sind, **dadurch gekennzeichnet, dass** wenigstens einige der Zellen einen Schaltbefehl (12) aufweisen, wobei der Schaltbefehl eine Änderung des Aktivierungsstatus eines Synchronous Transfer Mode-Kanals anzeigt, wobei das Verfahren die folgenden Schritte umfasst:
Erkennen jener Synchronous Transfer Mode-Kanäle anhand der Schaltbefehle (12), die aktiv sind, und
Zusammensetzen der Synchronous Transfer Mode-Kanäle (11) aus aufeinanderfolgenden Asynchronous Transfer Mode-Zellen (1) unter Verwendung des aus den Schaltbefehlen abgeleiteten Zustands der Synchronous Transfer Mode-Kanäle.

86. Verfahren nach Anspruch 85, bei dem, wenn mehr als ein Synchronous Transfer Mode-Kanal (11) in einer Asynchronous Transfer Mode-Zelle (1) den Aktivierungsstatus ändert, eine entsprechende Anzahl von Schaltbefehlen (12) in die Asynchronous Transfer Mode-Zelle eingefügt wird.

87. Verfahren nach Anspruch 85, bei dem, wenn kein Synchronous Transfer Mode-Kanal in einer Asynchronous Transfer Mode-Zelle den Aktivierungsstatus ändert, keine Schaltbefehle in die Asynchronous Transfer Mode-Zelle (1) eingefügt werden.

88. Verfahren nach Anspruch 85 oder 86, bei dem Synchronous Transfer Mode-Kanäle (11) und Schaltbefehle (12) die Asynchronous Transfer Mode-Zelle (1) von entgegengesetzten Enden der Zelle füllen.

89. Verfahren nach einem der Ansprüche 85 bis 88, bei dem das Konvergenz-Teilschicht-Anzeigebit in jeder Asynchronous Transfer Mode-Zelle zum Anzeigen des Vorhandenseins von Schaltbefehlen in der Zelle verwendet wird.

90. Verfahren nach einem der Ansprüche 85 bis 89, bei dem die Schaltbefehle (12) zwei Bytes umfassen, wobei das erste einen Zeiger (18) aufweist, der auf den Anfang eines Blocks von Synchronous Transfer Mode-Kanälen verweist, und das zweite Byte einen Zeiger (19) aufweist, der auf den Kanal in dem Block von Synchronous Transfer Mode-Kanälen (11) verweist, auf den sich der Schaltbefehl (12) bezieht.

91. Verfahren nach Anspruch 90, bei dem das erste Byte ferner ein Bit aufweist, das anzeigt, ob in der Asynchronous Transfer Mode-Zelle weitere Schaltbefehle vorhanden sind.

92. Verfahren nach Anspruch 90 oder Anspruch 91, bei dem das zweite Byte ferner Daten aufweist, die anzeigen, ob ein Synchronous Transfer Mode-Kanal eine Anzahl von Unterkanälen aufweist und, wenn ja, auf welchen Unterkanal sich der Schaltbefehl bezieht.

93. Verfahren nach einem der Ansprüche 85 bis 92, bei dem in gewünschten Intervallen ein Neusynchronisationsbefehl (22) gesendet wird, umfassend den Schritt des Prüfens des aktuellen Aktivierungsstatus aller Synchronous Transfer Mode-Kanäle (11), wobei der Neusynchronisationsbefehl ausreichend Informationen enthält, so dass das Verfahren den Zustand aller Synchronous Transfer Mode-Kanäle feststellen kann.

94. Verfahren nach Anspruch 93, bei dem der Neusynchronisationsbefehl (22) einen ersten Befehl (14), der anzeigt, dass Neusynchronisationsanweisungen übertragen werden, eine Reihe von Schaltbefehlen (13), je einen für jeden aktiven Synchronous Transfer Mode-Kanal (11), und einen Schlussbefehl (14), der anzeigt, dass die Neusynchronisationsanweisungen vollständig sind, umfasst.

95. Verfahren nach Anspruch 93, bei dem der Neusynchronisationsbefehl (22) einen ersten Befehl (14), der anzeigt, dass Neusynchronisationsanweisungen übertragen werden, eine Reihe von Schaltbefehlen (13), je einen für jeden inaktiven Synchronous Transfer Mode-Kanal, und einen Schlussbefehl (14), der anzeigt, dass die Neusynchronisationsanweisungen vollständig sind, umfasst.

96. Verfahren nach einem der Ansprüche 93 bis 95, bei dem der Neusynchronisationsbefehl (22) Fehlererkennung und/oder - korrektur aufweist, wobei das Verfahren ferner den Schritt des Prüfens und/oder Korrigierens des Neusynchronisationsbefehls umfasst.

97. Verfahren nach Anspruch 96, bei dem die Fehlererkennung/- korrektur einen Code für zyklische Blockprüfung umfasst.

98. Verfahren nach einem der Ansprüche 95 bis 97, bei dem ein Schaltbefehl (12) für einen inaktiven Kanal ein drittes Byte aufweist, das den Wert anzeigt, der diesem ungenutzten Kanal vom Empfänger zuzuweisen ist, umfassend den weiteren Schritt des Zuordnens dieses Wertes dem empfangenen ungenutzten Kanal.

## Revendications

1. Système de communications comprenant un émetteur, un récepteur et un support de transmission entre l'émetteur et le récepteur, l'émetteur étant configuré pour émettre des cellules à mode de transfert asynchrone (1) dans lesquelles des canaux à mode de transfert synchrone (11) sont assemblés ; **caractérisé en ce que** l'émetteur est configuré de telle sorte qu'au moins certaines des cellules à mode de transfert asynchrone comportent une commande de commutation (12) indiquant un changement de l'état d'activation d'un canal à mode de transfert synchrone.

2. Système selon la revendication 1, dans lequel quand plus d'un canal à mode de transfert synchrone dans une cellule à mode de transfert asynchrone change d'état d'activation un nombre correspondant de commandes de commutation (12) est inclus dans la cellule à mode de transfert asynchrone (1).

3. Système selon la revendication 1, dans lequel quand aucun canal à mode de transfert synchrone dans une cellule à mode de transfert asynchrone ne change d'état d'activation aucune commande de commutation n'est incluse dans la cellule à mode de transfert asynchrone (1).

4. Système selon la revendication 1 ou la revendication 2, dans lequel des canaux à mode de transfert synchrone (11) et des commandes de commutation (12) remplissent la cellule à mode de transfert asynchrone (1) depuis des extrémités opposées de la cellule.

5. Système selon l'une quelconque des revendications précédentes, dans lequel le bit indicateur de sous-couche de convergence dans chaque cellule à mode de transfert asynchrone (1) sert à indiquer la présence de commandes de commutation (12) dans la cellule.

6. Système selon l'une quelconque des revendications précédentes, dans lequel les commandes de commutation (12) comprennent deux octets, le premier comportant un pointeur (18) pointant vers le début d'un bloc de canaux à mode de transfert synchrone et le deuxième comportant un pointeur (19) pointant vers le canal compris dans le bloc de canaux à mode de transfert synchrone auquel s'applique la commande de commutation.

7. Système selon l'une quelconque des revendications précédentes, dans lequel les commandes de commutation (12) comprennent trois octets, le troisième octet comportant un ou plusieurs bits de détection/correction d'erreurs pour détecter/corriger des erreurs des données dans les premier et/ou deuxième octets.

8. Système selon la revendication 6 ou la revendication 7, dans lequel le premier octet comporte en outre un bit indicatif de la présence ou non d'autres commandes de commutation dans la cellule à mode de transfert asynchrone.

9. Système selon l'une quelconque des revendications 6 à 8, dans lequel le deuxième octet comporte en outre des données indiquant si un canal à mode de transfert synchrone comprend ou non un nombre de sous-canaux et dans l'affirmative à quel sous-canal la commande de commutation s'applique.

10. Système selon l'une quelconque des revendications précédentes, dans lequel l'émetteur est configuré pour envoyer une commande de resynchronisation (22) à des intervalles souhaités, la commande de resynchronisation portant suffisamment d'informations pour permettre au récepteur de vérifier l'état d'activation courant de tous les canaux à mode de transfert synchrone.

11. Système selon la revendication 10, dans lequel la commande de resynchronisation (22) comprend une première commande (14) indiquant que des instructions de resynchronisation sont en cours d'émission, une série de commandes de commutation (15), une pour chaque canal à mode de transfert synchrone actif, et une commande finale (14) indiquant que les instructions de resynchronisation sont terminées.

12. Système selon la revendication 10, dans lequel la commande de resynchronisation (22) comprend une première commande (14) indiquant que des instructions de resynchronisation sont en cours d'émission, une série de commandes de commutation (13), une pour chaque canal à mode de transfert synchrone inactif, et une commande finale (14) indiquant que les instructions de resynchronisation sont terminées.

13. Système selon l'une quelconque des revendications 10 à 12, dans lequel la commande de resynchronisation (22) comporte une détection et/ou correction d'erreurs.

14. Système selon la revendication 13, dans lequel la détection/correction d'erreurs comprend un code de contrôle de redondance cyclique.

15. Système selon l'une quelconque des revendications 12 à 14, dans lequel une commande de commutation (12) d'un canal inactif comporte un troisième octet qui indique la valeur que le récepteur doit assigner à ce canal au repos.

16. Système selon l'une quelconque des revendications précédentes, comprenant un moyen pour surveiller trois ou plusieurs octets consécutifs dans chaque canal à mode de transfert synchrone et pour lancer une commande de commutation de ce canal indiquant que le canal est maintenant inactif s'il était précédemment actif et que la valeur des octets consécutifs n'a pas changé.

17. Système selon l'une quelconque des revendications précédentes, comprenant un moyen pour surveiller les octets dans chaque canal à mode de transfert synchrone et pour lancer une commande de commutation de ce canal indiquant que le canal est maintenant actif s'il était précédemment inactif et que la valeur d'octet courante a changé.

18. Système selon l'une quelconque des revendications précédentes, comprenant un moyen pour maintenir actifs un nombre minimum souhaité de canaux.

19. Système selon la revendication 18, comprenant un moyen pour permettre la sélection par l'utilisateur du nombre minimum.

20. Système selon l'une quelconque des revendications précédentes, comprenant des premier et second terminaux, chacun comprenant un émetteur et un récepteur, et un support de transmission entre les émetteurs et récepteurs, chaque émetteur étant configuré pour émettre des cellules à mode de transfert asynchrone (1) dans lesquelles des canaux à mode de transfert synchrone (11) sont assemblés ; dans lequel les émetteurs sont configurés de telle sorte qu'au moins certaines des cellules à mode de transfert asynchrone comportent une commande de commutation (12) indicative d'un changement de l'état d'activation d'un canal à mode de transfert synchrone.

21. Système selon la revendication 20, dans lequel les commandes de commutation (12) produites par les premier et second émetteurs sont indépendantes les unes des autres.

22. Emetteur configuré pour émettre des cellules à mode de transfert asynchrone (1) dans lesquelles des canaux à mode de transfert synchrone (11) sont assemblés ; **caractérisé en ce qu'**au moins certaines des cellules à mode de transfert asynchrone comportent une commande de commutation (12) indiquant un changement de l'état d'activation d'un canal à mode de transfert synchrone.

23. Emetteur selon la revendication 22, configuré de telle sorte que lorsque plus d'un canal à mode de transfert synchrone (11) dans une cellule à mode de transfert asynchrone (1) change d'état d'activation, la cellule à mode de transfert asynchrone comporte un nombre correspondant de commandes de commutation (12).

24. Emetteur selon la revendication 22, configuré de telle sorte que lorsque aucun canal à mode de transfert synchrone (11à dans une cellule à mode de transfert asynchrone (1) ne change d'état d'activation, la cellule à mode de transfert asynchrone ne comporte aucune commande de commutation (12).

25. Emetteur selon la revendication 23 ou la revendication 24, dans lequel des canaux à mode de transfert synchrone (11) et des commandes de commutation (12) remplissent la cellule à mode de transfert asynchrone (1) depuis des extrémités opposées de la cellule.

26. Emetteur selon l'une quelconque des revendications 23 à 25, dans lequel chaque cellule à mode de transfert asynchrone (1) comporte un bit indicateur de sous-couche de convergence et le bit indicateur de sous-couche de convergence dans chaque cellule à mode de transfert asynchrone indique la présence de commandes de commutation (12) dans la cellule.

27. Emetteur selon l'une quelconque des revendications 22 à 26, dans lequel les commandes de commutation (12) comprennent deux octets, le premier comportant un pointeur pointant vers le début d'un bloc de canaux à mode de transfert synchrone et le deuxième comportant un pointeur pointant vers le canal compris dans le bloc de canaux à mode de transfert synchrone auquel s'applique la commande de commutation.

28. Emetteur selon la revendication 27, dans lequel le premier octet comporte en outre un bit indicatif de la présence ou non d'autres commandes de commutation dans la cellule à mode de transfert asynchrone (1).

29. Emetteur selon la revendications 27 ou la revendication 28, dans lequel le deuxième octet comporte en outre des données indiquant si un canal à mode de transfert synchrone comprend ou non un nombre de sous-canaux et dans l'affirmative à quel sous-canal la commande de commutation s'applique.

30. Emetteur selon l'une quelconque des revendications 22 à 29, configuré pour envoyer une commande de resynchronisation (22) à des intervalles souhaités, la commande de resynchronisation portant suffisamment d'informations pour permettre au récepteur de vérifier l'état d'activation courant de tous les canaux à mode de transfert synchrone (11).

31. Emetteur selon la revendication 30, dans lequel la commande de resynchronisation (22) comprend une première commande indiquant que des instructions de resynchronisation sont en cours d'émission, une série de commandes de commutation (13), une pour chaque canal à mode de transfert synchrone (11) actif, et une commande finale (14) indiquant que les instructions de resynchronisation sont terminées.

32. Emetteur selon la revendication 30, dans lequel la commande de resynchronisation (22) comprend une première commande indiquant que des instructions de resynchronisation sont en cours d'émission, une série de commandes de commutation (13), une pour chaque canal à mode de transfert synchrone (11) inactif, et une commande finale (14) indiquant que les instructions de resynchronisation sont terminées.

33. Emetteur selon l'une quelconque des revendications 30 à 32, dans lequel la commande de resynchronisation (22) comporte une détection et/ou correction d'erreurs.

34. Emetteur selon la revendication 33, dans lequel la détection/correction d'erreurs comprend un code de contrôle de redondance cyclique.

35. Emetteur selon l'une quelconque des revendications 31 à 34, dans lequel une commande de commutation (13) d'un canal inactif comporte un troisième octet qui indique la valeur que le récepteur doit assigner à ce canal au repos.

36. Emetteur selon l'une quelconque des revendications 20 à 35, comprenant un moyen pour surveiller trois ou plusieurs octets consécutifs dans chaque canal à mode de transfert synchrone (11) et pour lancer une commande de commutation (12) de ce canal indiquant que le canal est maintenant inactif s'il était précédemment actif et que la valeur des octets consécutifs n'a pas changé.

37. Emetteur selon l'une quelconque des revendications 20 à 36, comprenant un moyen pour surveiller les octets dans chaque canal à mode de transfert synchrone (11) et pour lancer une commande de commutation (12) de ce canal indiquant que le canal est maintenant actif s'il était précédemment inactif et que la valeur d'octet courante a changé.

38. Emetteur selon l'une quelconque des revendications 20 à 35, comprenant un moyen pour maintenir actifs un nombre minimum souhaité de canaux.

39. Emetteur selon la revendication 38, dans lequel le nombre minimum est sélectionnable par l'utilisateur.

40. Récepteur pour recevoir des cellules à mode de transfert asynchrone (1) dans lesquelles des canaux à mode de transfert synchrone (11) sont assemblés ; **caractérisé en ce qu'**au moins certaines des cellules à mode de transfert asynchrone comportent une commande de commutation (12), la commande de commutation indiquant un changement de l'état d'activation d'un canal à mode de transfert synchrone et le récepteur étant configuré pour détecter à partir des commandes de commutation les canaux à mode de transfert synchrone qui sont actifs et assembler les canaux à mode de transfert synchrone provenant de cellules à mode de transfert asynchrone.

41. Récepteur selon la revendication 40, dans lequel quand plus d'un canal à mode de transfert synchrone (11) dans une cellule à mode de transfert asynchrone (1) change d'état d'activation, un nombre correspondant de commandes de commutation (12) est inclus dans la cellule à mode de transfert asynchrone.

42. Récepteur selon la revendication 40, dans lequel quand aucun canal à mode de transfert synchrone dans une cellule à mode de transfert asynchrone ne change d'état d'activation, aucune commande de commutation n'est incluse dans la cellule à mode de transfert asynchrone.

43. Récepteur selon la revendication 40 ou la revendication 41, dans lequel des canaux à mode de transfert synchrone (11) et des commandes de commutation (12) remplissent la cellule à mode de transfert asynchrone (1) depuis des extrémités opposées de la cellule.

44. Récepteur selon l'une quelconque des revendications 40 à 43, dans lequel le bit indicateur de sous-couche de convergence dans chaque cellule à mode de transfert asynchrone (1) indique la présence de commandes de commutation (12) dans la cellule.

45. Récepteur selon l'une quelconque des revendications 40 à 44, dans lequel les commandes de commutation (12) comprennent deux octets, le premier comportant un pointeur pointant vers le début d'un bloc de canaux à mode de transfert synchrone et le deuxième comportant un pointeur pointant vers le canal compris dans le bloc de canaux à mode de transfert synchrone auquel s'applique la commande de commutation.

46. Récepteur selon la revendication 45, dans lequel le premier octet comporte en outre un bit indicatif de la présence ou non d'autres commandes de commutation (12) dans la cellule à mode de transfert asynchrone.

47. Récepteur selon la revendication 45 ou la revendication 46, dans lequel le deuxième octet comporte en outre des données indiquant si un canal à mode de transfert synchrone (11) comprend ou non un nombre de sous-canaux et dans l'affirmative à quel sous-canal la commande de commutation (12) s'applique.

48. Récepteur selon l'une quelconque des revendications 40 à 47, qui, quand une commande de resynchronisation (22) portant suffisamment d'informations est envoyée à des intervalles souhaités, est configuré pour vérifier l'état d'activation courant de tous les canaux à mode de transfert synchrone (11).

49. Récepteur selon la revendication 48, dans lequel la commande de resynchronisation (22) comprend une première commande indiquant que des instructions de resynchronisation sont en cours d'émission, une série de commandes de commutation (12), une pour chaque canal à mode de transfert synchrone (11) actif, et une commande finale (14) indiquant que les instructions de resynchronisation sont terminées.

50. Récepteur selon la revendication 48, dans lequel la commande de resynchronisation (22) comprend une première commande indiquant que des instructions de resynchronisation sont en cours d'émission, une série de commandes de commutation (13), une pour chaque canal à mode de transfert synchrone (11) inactif, et une commande finale (14) indiquant que les instructions de resynchronisation sont terminées.

51. Récepteur selon l'une quelconque des revendications 48 à 50, dans lequel la commande de resynchronisation (22) comporte une détection et/ou correction d'erreurs.

52. Récepteur selon la revendication 51, dans lequel la détection/correction d'erreurs comprend un code de contrôle de redondance cyclique.

53. Récepteur selon l'une quelconque des revendications 50 à 52, dans lequel une commande de commutation d'un canal inactif comporte un troisième octet qui indique la valeur que le récepteur doit assigner à ce canal au repos.

54. Procédé de communications comprenant les étapes suivantes :
groupage d'une trame à mode de transfert synchrone comprenant une pluralité de canaux (11) dans des cellules à mode de transfert asynchrone (1) en vue de son émission,
**caractérisé par**
l'insertion dans chaque cellule à mode de transfert asynchrone (1) dans laquelle l'état d'activation d'un canal à mode de transfert synchrone (11) change, d'une commande de commutation (12) indiquant si un canal à mode de transfert synchrone est actif ou inactif,
l'émission des cellules à mode de transfert asynchrone (1) comportant les commandes de commutation (12), et
sur réception des cellules à mode de transfert asynchrone (1), utilisation de la commande de commutation (12) pour permettre le dégroupage des canaux à mode de transfert synchrone (11) des paquets à mode de transfert asynchrone.

55. Procédé selon la revendication 54, comprenant l'étape, quand l'état d'activation de plus d'un canal à mode de transfert synchrone (11) change, d'inclusion d'un nombre correspondant de commandes de commutation (12) dans cette cellule à mode de transfert asynchrone, une pour chaque canal changeant d'état.

56. Procédé selon la revendication 54 ou la revendication 55, comprenant l'étape d'insertion de canaux à mode de transfert synchrone (11) dans une cellule à mode de transfert asynchrone (1) en commençant par une extrémité et d'insertion des commandes de commutation (12) dans le paquet à mode de transfert asynchrone en commençant par l'autre extrémité.

57. Procédé selon l'une quelconque des revendications 54 à 56, dans lequel la commande de commutation (12) comprend deux octets, un premier octet contenant une valeur de décalage (18) qui identifie le début d'une trame à mode de transfert synchrone (11) dans la cellule à mode de transfert asynchrone et un deuxième octet (19) qui identifie le canal compris dans la trame à mode de transfert synchrone auquel correspond la commande de commutation.

58. Procédé selon la revendication 57, dans lequel un des octets comporte un bit qui indique si la commande de commutation est ou non la dernière dans la cellule à mode de transfert asynchrone.

59. Procédé selon la revendication 57 ou la revendication 58, dans lequel un des octets comporte trois bits identifiant un bit particulier ou une combinaison de bits dans le canal identifié par le deuxième octet.

60. Procédé selon l'une quelconque des revendications 54 à 59, dans lequel la commande de commutation sert à changer l'état d'activation d'un canal à mode de transfert synchrone.

61. Système selon l'une quelconque des revendications 54 à 60, dans lequel des paquets de resynchronisation (22) sont envoyés à des intervalles souhaités, les paquets de resynchronisation contenant suffisamment d'informations pour identifier tous les canaux couramment actifs.

62. Procédé selon la revendication 61, dans lequel le paquet de resynchronisation (22) comprend une première commande de resynchronisation (14) suivie d'un nombre suffisant de commandes de commutation (13) pour permettre d'identifier tous les canaux actifs et de les terminer par une autre commande de resynchronisation (14).

63. Procédé selon l'une quelconque des revendications 54 à 62, comprenant les étapes supplémentaires suivantes :
surveillance de l'état de trois ou plusieurs octets consécutifs dans chaque canal à mode de transfert synchrone, et
lancement d'une commande de commutation de ce canal indiquant que le canal est maintenant inactif s'il était précédemment actif et que la valeur des octets consécutifs n'a pas changé.

64. Procédé selon l'une quelconque des revendications 54 à 62, comprenant les étapes supplémentaires suivantes :
surveillance de l'état de trois ou plusieurs octets consécutifs dans chaque canal à mode de transfert synchrone, et
lancement d'une commande de commutation de ce canal indiquant que le canal est maintenant actif s'il était précédemment inactif et que la valeur d'octet courante a changé.

65. Procédé selon l'une quelconque des revendications 54 à 64, comprenant l'étape supplémentaire de maintien en l'état actif d'un nombre minimum souhaité de canaux.

66. Procédé selon la revendication 65, dans lequel le nombre minimum est programmable par l'utilisateur.

67. Procédé d'émission de cellules à mode de transfert asynchrone (1) dans lequel des canaux à mode de transfert synchrone (11) sont assemblés, **caractérisé par** l'étape d'inclusion d'une commande de commutation(12) dans au moins certaines des cellules à mode de transfert asynchrone, la commande de commutation (12) indiquant un changement de l'état d'activation d'un canal à mode de transfert synchrone (11).

68. Procédé selon la revendication 67, dans lequel quand plus d'un canal à mode de transfert synchrone (11) dans une cellule à mode de transfert asynchrone change d'état d'activation un nombre correspondant de commandes de commutation (12) est inclus dans la cellule à mode de transfert asynchrone.

69. Procédé selon la revendication 67, dans lequel quand aucun canal à mode de transfert synchrone dans une cellule à mode de transfert asynchrone ne change d'état d'activation aucune commande de commutation n'est incluse dans la cellule à mode de transfert asynchrone.

70. Procédé selon la revendication 68 ou la revendication 69, dans lequel des canaux à mode de transfert synchrone (11) et des commandes de commutation (12) remplissent la cellule à mode de transfert asynchrone depuis des extrémités opposées de la cellule.

71. Procédé selon l'une quelconque des revendications 67 à 70, dans lequel chaque cellule à mode de transfert asynchrone comporte un bit indicateur de sous-couche de convergence et le bit indicateur de sous-couche de convergence dans chaque cellule à mode de transfert asynchrone sert à indiquer la présence de commandes de commutation dans la cellule.

72. Procédé selon l'une quelconque des revendications 67 à 71, dans lequel les commandes de commutation comprennent deux octets, le premier comportant un pointeur (18) pointant vers le début d'un bloc de canaux à mode de transfert synchrone (11) et le deuxième comportant un pointeur (19) pointant vers le canal compris dans le bloc de canaux à mode de transfert synchrone auquel s'applique la commande de commutation (12).

73. Procédé selon la revendication 72, dans lequel le premier octet comporte en outre un bit indicatif de la présence ou non d'autres commandes de commutation (12) dans la cellule à mode de transfert asynchrone (1).

74. Procédé selon la revendication 72 ou la revendication 73, dans lequel le deuxième octet comporte en outre des données indiquant si un canal à mode de transfert synchrone comprend ou non un nombre de sous-canaux et dans l'affirmative à quel sous-canal la commande de commutation (12) s'applique.

75. Procédé selon l'une quelconque des revendications 67 à 74, dans lequel une commande de resynchronisation (22) est envoyée à des intervalles souhaités, la commande de resynchronisation portant suffisamment d'informations pour permettre au récepteur de vérifier l'état d'activation courant de tous les canaux à mode de transfert synchrone (11).

76. Procédé selon la revendication 75, dans lequel la commande de resynchronisation (22) comprend une première commande (14) indiquant que des instructions de resynchronisation sont en cours d'émission, une série de commandes de commutation (13), une pour chaque canal à mode de transfert synchrone actif, et une commande finale (14) indiquant que les instructions de resynchronisation sont terminées.

77. Procédé selon la revendication 76, dans lequel la commande de resynchronisation (22) comprend une première commande (14) indiquant que des instructions de resynchronisation sont en cours d'émission, une série de commandes de commutation (13), une pour chaque canal à mode de transfert synchrone inactif, et une commande finale (14) indiquant que les instructions de resynchronisation sont terminées.

78. Procédé selon l'une quelconque des revendications 75 à 77, dans lequel la commande de resynchronisation (22) comporte une détection et/ou correction d'erreurs.

79. Procédé selon la revendication 78, dans lequel la détection/correction d'erreurs comprend un code de contrôle de redondance cyclique.

80. Procédé selon l'une quelconque des revendications 76 à 79, dans lequel une commande de commutation (13) d'un canal inactif comporte un troisième octet qui indique la valeur que le récepteur doit assigner à ce canal au repos.

81. Procédé selon l'une quelconque des revendications 67 à 80, comprenant les étapes supplémentaires de :
surveillance de l'état de trois ou plusieurs octets consécutifs de chaque canal à mode de transfert synchrone (11), et
lancement d'une commande de commutation (12) de ce canal indiquant que le canal est maintenant inactif s'il était précédemment actif et que la valeur des octets consécutifs n'a pas changé.

82. Procédé selon l'une quelconque des revendications 67 à 80, comprenant les étapes supplémentaires de :
surveillance de l'état de trois ou plusieurs octets consécutifs de chaque canal à mode de transfert synchrone (11), et
lancement d'une commande de commutation (12) de ce canal indiquant que le canal est maintenant actif s'il était précédemment inactif et que la valeur d'octet courante a changé.

83. Procédé selon l'une quelconque des revendications 67 à 82, comprenant l'étape supplémentaire de maintien en l'état actif d'un nombre minimum souhaité de canaux à mode de transfert synchrone.

84. Procédé selon la revendication 83, dans lequel le nombre minimum est programmable.

85. Procédé de réception pour recevoir des canaux à mode de transfert synchrone (11) assemblés dans des cellules à mode de transfert asynchrone (1) ; **caractérisé en ce qu'**au moins certaines des cellules comportent une commande de commutation (12), la commande de commutation indiquant un changement de l'état d'activation d'un canal à mode de transfert synchrone, le procédé comprenant les étapes suivantes :
détection à partir des commandes de commutation (12) des canaux à mode de transfert synchrone qui sont actifs, et
assemblage des canaux à mode de transfert synchrone (11) provenant de cellules à mode de transfert asynchrone (1) en utilisant l'état des canaux à mode de transfert synchrone dérivé des commandes de commutation.

86. Procédé selon la revendication 85, dans lequel quand plus d'un canal à mode de transfert synchrone (11) dans une cellule à mode de transfert asynchrone (1) change d'état d'activation, un nombre correspondant de commandes de commutation (12) est inclus dans la cellule à mode de transfert asynchrone.

87. Procédé selon la revendication 85, dans lequel quand aucun canal à mode de transfert synchrone dans une cellule à mode de transfert asynchrone ne change d'état d'activation, aucune commande de commutation n'est incluse dans la cellule à mode de transfert asynchrone (1).

88. Procédé selon la revendication 85 ou la revendication 86, dans lequel des canaux à mode de transfert synchrone (11) et des commandes de commutation (12) remplissent la cellule à mode de transfert asynchrone (1) depuis des extrémités opposées de la cellule.

89. Procédé selon l'une quelconque des revendications 85 à 88, dans lequel le bit indicateur de sous-couche de convergence dans chaque cellule à mode de transfert asynchrone indique la présence de commandes de commutation dans la cellule.

90. Procédé selon l'une quelconque des revendications 85 à 89, dans lequel les commandes de commutation (12) comprennent deux octets, le premier comportant un pointeur (18) pointant vers le début d'un bloc de canaux à mode de transfert synchrone et le deuxième comportant un pointeur (19) pointant vers le canal compris dans le bloc de canaux à mode de transfert synchrone (11) auquel s'applique la commande de commutation (12).

91. Procédé selon la revendication 90, dans lequel le premier octet comporte en outre un bit indicatif de la présence ou non d'autres commandes de commutation dans la cellule à mode de transfert asynchrone.

92. Procédé selon la revendications 90 ou la revendication 91, dans lequel le deuxième octet comporte en outre des données indiquant si un canal à mode de transfert synchrone comprend ou non un nombre de sous-canaux et dans l'affirmative à quel sous-canal la commande de commutation s'applique.

93. Procédé selon l'une quelconque des revendications 85 à 92, dans lequel une commande de resynchronisation (22) est envoyée à des intervalles souhaités, comprenant l'étape de vérification de l'état d'activation courant de tous les canaux à mode de transfert synchrone (11), la commande de resynchronisation portant suffisamment d'informations pour permettre au procédé d'établir l'état de tous les canaux à mode de transfert synchrone.

94. Procédé selon la revendication 93, dans lequel la commande de resynchronisation (22) comprend une première commande (14) indiquant que des instructions de resynchronisation sont en cours d'émission, une série de commandes de commutation (13), une pour chaque canal à mode de transfert synchrone (11) actif, et une commande finale (14) indiquant que les instructions de resynchronisation sont terminées.

95. Procédé selon la revendication 93, dans lequel la commande de resynchronisation (22) comprend une première commande (14) indiquant que des instructions de resynchronisation sont en cours d'émission, une série de commandes de commutation (13), une pour chaque canal à mode de transfert synchrone inactif, et une commande finale (14) indiquant que les instructions de resynchronisation sont terminées.

96. Procédé selon l'une quelconque des revendications 93 à 95, dans lequel la commande de resynchronisation (22) comporte une détection et/ou correction d'erreurs, le procédé comprenant en outre l'étape de vérification et/ou de correction de la commande de resynchronisation.

97. Procédé selon la revendication 96, dans lequel la détection/correction d'erreurs comprend un code de contrôle de redondance cyclique.

98. Procédé selon l'une quelconque des revendications 95 à 97, dans lequel une commande de commutation (12) d'un canal inactif comporte un troisième octet qui indique la valeur que le récepteur doit assigner à ce canal au repos, comprenant l'étape supplémentaire d'assignation de cette valeur au canal au repos reçu.
